# EUROPEAN PATENT APPLICATION

(11) **EP 4 645 030 A1**
(43) Date of publication of application: **05.11.2025**
(21) Application number: 23920152.8
(22) Date of filing: 14.12.2023
(51) Int. Cl.: G06F 1/16, G05G 5/04, G05G 5/05, H04M 1/02

(54) **ELECTRONIC DEVICE COMPRISING FLEXIBLE DISPLAY**

(30) Priority: 03.02.2023 KR 20230014881; 21.02.2023 KR 20230023230
(71) Applicant: Samsung Electronics Co., Ltd., Suwon-si, Gyeonggi-do 16677 (KR)
(72) Inventor: LEE, Junyoung, Suwon-si, Gyeonggi-do 16677 (KR); LEE, Wonho, Suwon-si, Gyeonggi-do 16677 (KR); CHOI, Junyoung, Suwon-si, Gyeonggi-do 16677 (KR); YOO, Minwoo, Suwon-si, Gyeonggi-do 16677 (KR)
(74) Representative: Gulde & Partner
(86) International application number: PCT/KR2023/020701
(87) International publication number: WO 2024/162603

(57) **Abstract**

An electronic device according to an embodiment may comprise: a first housing; a second housing which is movable with respect to the first housing; and a display. The first housing may comprise: a support portion which overlaps a part of the second housing within a plurality of states of the electronic device, including a fist state where a display area of the display, exposed out of the first housing, has the smallest size and a second state where the display area has the largest size; and a stopper which is disposed within the support portion and is paired with a fastening groove. The stopper may be configured to provide the electronic device with a fastened state where at least a part of the stopper is positioned in the fastening groove within the second state and an unfastened state where the stopper is positioned out of the fastening groove.

## Description

### [Technical Field]

Embodiments to be described later relate to an electronic device comprising a flexible display.

### [Background Art]

In order for a user to easily carry an electronic device, the electronic device may be miniaturized. Despite the miniaturization of the electronic device, there is an increasing need for an electronic device in which a size of a display for displaying content may be changed such that the user may be provided with various contents via the electronic device. For example, the electronic device may include a flexible display in which a size of a display exposed to the outside of the electronic device may be changed.

### [Disclosure]

### [Technical Solution]

According to an embodiment, an electronic device may comprise a first housing, and a second housing that includes a fastening groove and is movable relative to the first housing in a first direction and in a second direction opposite to the first direction. The electronic device may comprise a display including a first region disposed on the second housing and a second region that extends from the first region and is rolled up into the first housing or exposed outside the first housing along the second housing moved with respect to the first housing. The first housing may include a support portion that overlaps a part of the second housing in a plurality of states, including a first state of the electronic device in which a display area of the display exposed outside the first housing has a minimum size and a second state of the electronic device in which the display area has a maximum size, and a stopper positioned within the support portion and paired with the fastening groove. The stopper may be configured to provide, to the electronic device, in the second state, a fastened state in which at least a part of the stopper is positioned inside the fastening groove to fasten the second housing to the first housing, and a fastening-release state in which the stopper is positioned outside the fastening groove to release the fastening between the second housing and the first housing.

According to an embodiment, an electronic device may comprise a first housing, and a second housing that includes a fastening groove and is movable relative to the first housing in a first direction and in a second direction opposite to the first direction. The electronic device may comprise a display including a first region disposed on the second housing and a second region that extends from the first region and is rolled up into the first housing or exposed outside the first housing along the second housing moved with respect to the first housing. The electronic device may comprise a drive unit coupled to the first housing, including a motor and a first gear rotatable by driving the motor. The electronic device may comprise a second gear in the second housing, engaging the first gear, configured to move the second housing relative to the first housing in the first direction and the second direction opposite to the first direction by the driving the motor, the second gear being movable with respect to the second housing in the second state. The first housing may include a support portion that overlaps a part of the second housing in a plurality of states, including a first state of the electronic device in which a display area of the display exposed outside the first housing has a minimum size and a second state of the electronic device in which the display area has a maximum size, a stopper positioned within the support portion and paired with the fastening groove, an elastic structure configured, in the second state, to press the stopper toward the fastening groove, and a seating groove configured to guide movement of the stopper by supporting at least a part of the stopper and being aligned with the fastening groove in the second state. The second gear may include a protrusion structure configured to press the stopper in a direction different from a pressing direction of the elastic structure, as the second gear moves with respect to the second housing in the second state. The stopper may be configured to provide, to the electronic device, in the second state, a fastened state in which at least a part of the stopper is positioned inside the fastening groove to fasten the second housing to the first housing, and a fastening-release state in which the stopper is positioned outside the fastening groove to release the fastening between the second housing and the first housing.

### [Description of the Drawings]

FIG. 1 is a block diagram of an electronic device in a network environment according to various embodiments.
FIG. 2A is a top plan view of an exemplary electronic device in a first state.
FIG. 2B is a bottom view of an exemplary electronic device in a first state.
FIG. 2C is a top plan view of an exemplary electronic device in a second state.
FIG. 2D is a bottom view of an exemplary electronic device in a second state.
FIGS. 3A and 3B are exploded perspective views of an exemplary electronic device.
FIG. 4A is a cross-sectional view of an exemplary electronic device in a first state.
FIG. 4B is a cross-sectional view of an exemplary electronic device in a second state.
FIG. 5A illustrates a part of an exemplary electronic device.
FIG. 5B is a partial cross-sectional view of an exemplary electronic device cut along line A-A' of FIG. 5A.
FIG. 5C illustrates a part of an exemplary electronic device.
FIG. 6A illustrates a part of an exemplary electronic device.
FIG. 6B is a partial cross-sectional view of an exemplary electronic device cut along line B-B' of FIG. 6A.
FIGS. 7A, 7B, 7C, and 7D illustrate an operation of an exemplary electronic device for changing from a first state to a second state.
FIGS. 7E, 7F, and 7G illustrate an operation of an exemplary electronic device for changing from a second state to a first state.
FIGS. 8A and 8B illustrate a part of an exemplary electronic device.
FIG. 9 illustrates an example of an operation of an exemplary electronic device.
FIG. 10 illustrates a part of an exemplary electronic device.
FIG. 11 illustrates an example of an operation of an exemplary electronic device.
FIGS. 12A and 12B illustrate a part of an exemplary electronic device.

### [Mode for Invention]

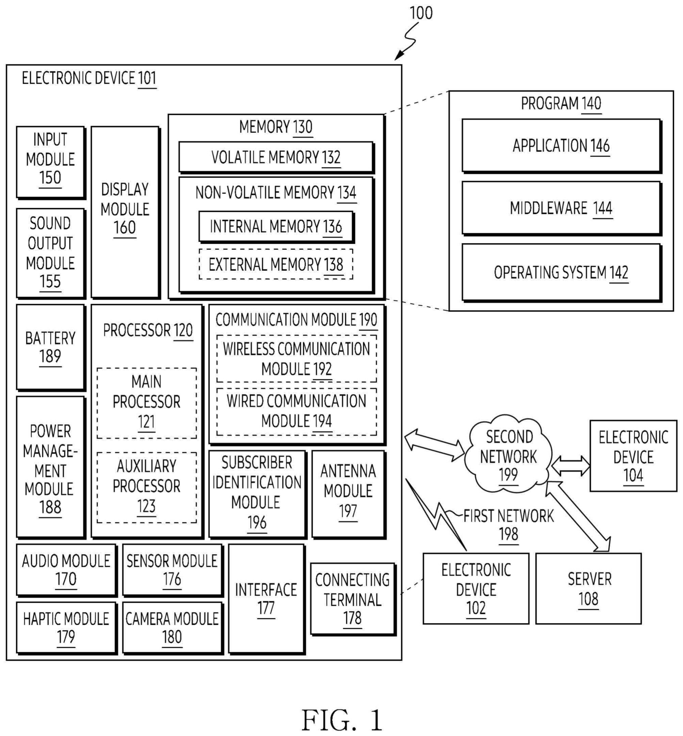

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

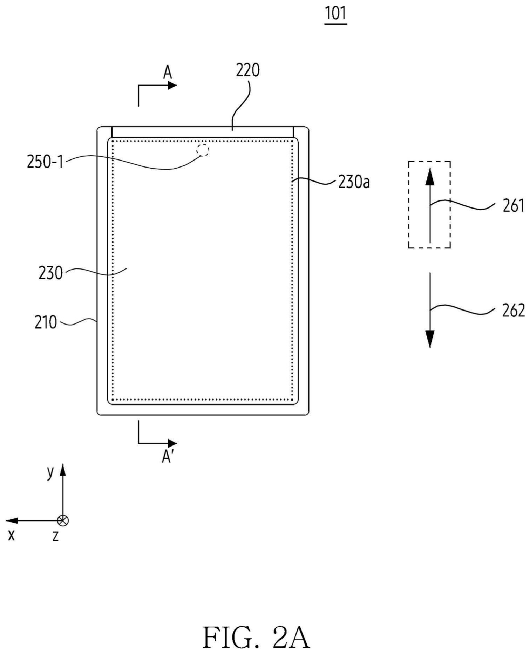

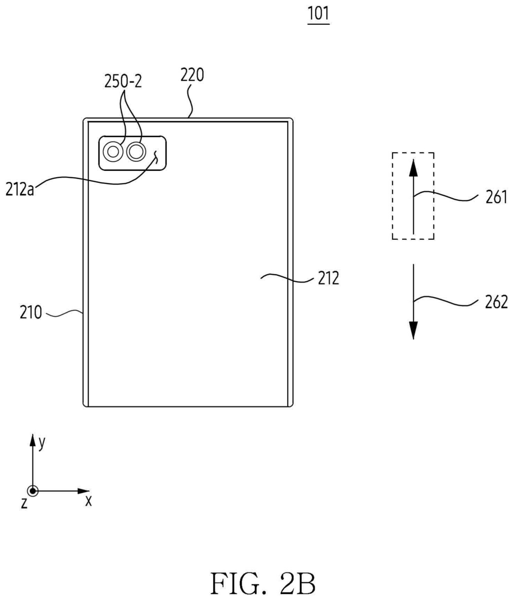

For example, a display of the display module 160 may be flexible. For example, the display may include a display area exposed outside a housing of the electronic device 101 that provides at least a part of an outer side of the electronic device 101. For example, since the display has flexibility, at least a part of the display may be rolled into the housing or slidable into the housing. For example, a size of the display area may be changed in accordance with a size of the at least a part of the display rolled into the housing or slid into the housing. For example, the electronic device 101 including the display may be in a plurality of states including a first state providing the display area having a first size and a second state providing the display area having a second size different from the first size. For example, the first state may be illustrated via the description of FIGS. 2A and 2B.

FIG. 2A is a top plan view of an exemplary electronic device in a first state.

Referring to FIG. 2A, an electronic device 101 may include a first housing 210, a second housing 220 that is movable relative to the first housing 210 in a first direction 261 parallel to a y-axis or a second direction 262 parallel to the y-axis and opposite to the first direction 261, and a display 230 (e.g., the display).

For example, the electronic device 101 may be in the first state. For example, in the first state, the second housing 220 may be movable relative to the first housing 210 in the first direction 261 of the first direction 261 and the second direction 262. For example, in the first state, the second housing 220 may not be movable in the second direction 262 relative to the first housing 210.

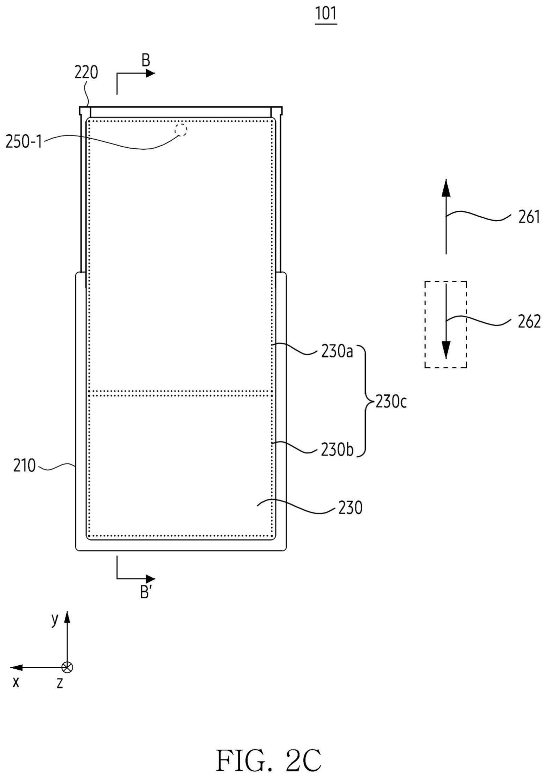

For example, in the first state, the display 230 may provide the display area having the smallest size. For example, in the first state, the display area may correspond to a region 230a. For example, although not illustrated in FIG. 2A, in the first state, a region (e.g., a region 230b of FIG. 2C) of the display 230 different from the region 230a, which is the display area, may be included in the first housing 210. For example, in the first state, the region may be covered by the first housing 210. For example, in the first state, the region may be rolled into the first housing 210. For example, in the first state, the region 230a may include a planar portion, unlike the region including a curved portion. However, it is not limited thereto. For example, in the first state, the region 230a may include a curved portion extending from the planar portion and positioned in an edge portion.

For example, the first state may be referred to as a slide-in state or a closed state in terms of at least a part of the second housing 220 being positioned in the first housing 210. For example, the first state may be referred to as a reduced state in terms of providing the display area having the smallest size. However, it is not limited thereto.

For example, the first housing 210 may include a first image sensor 250-1, in a camera module 180, visually exposed via a part of the region 230a and facing a direction parallel to a z-axis. For example, the camera module 180 may be disposed to perform its function without being visually exposed via a part of the region 230a in an internal space of the electronic device. For example, although not illustrated in FIG. 2A, the second housing 220 may include one or more second image sensors, in the camera module 180, exposed via a part of the second housing 220 and facing a direction parallel to the z-axis and opposite to the direction in which the first image sensor 250-1 faces. For example, the one or more second image sensors may be exemplified via the description of FIG. 2B.

FIG. 2B is a bottom view of an exemplary electronic device in a first state.

Referring to FIG. 2B, in the first state, one or more second image sensors 250-2 disposed in the second housing 220 may be positioned within a structure disposed in the first housing 210 for the one or more second image sensors 250-2. For example, in the first state, light from the outside of the electronic device 101 may be received by the one or more second image sensors 250-2 via the structure. For example, since the one or more second image sensors 250-2 are positioned within the structure in the first state, the one or more second image sensors 250-2 may be exposed via the structure in the first state. For example, the structure may be implemented in various ways. For example, the structure may be an opening or a notch. For example, the structure may be an opening 212a in a plate 212 of the first housing 210 surrounding at least a part of the second housing 220. However, it is not limited thereto. For example, in the first state, the one or more second image sensors 250-2 included in the second housing 220 may be covered by the plate 212 of the first housing 210.

Referring back to FIG. 2A, the first state may be changed to the second state.

For example, the first state (or the second state) may be changed to the second state (or the first state) via one or more intermediate states between the first state and the second state.

For example, the first state (or the second state) may be changed to the second state (or the first state) based on a predefined user input. For example, the first state (or the second state) may be changed to the second state (or the first state) in response to a user input to a physical button exposed via a part of the first housing 210 or a part of the second housing 220. For example, the first state (or the second state) may be changed to the second state (or the first state) in response to a touch input to an executable object displayed in the display area. For example, the first state (or the second state) may be changed to the second state (or the first state) in response to a touch input having a contact point on the display area and having a pressing intensity greater than or equal to a reference intensity. For example, the first state (or the second state) may be changed to the second state (or the first state) in response to a voice input received via a microphone of the electronic device 101. For example, the first state (or the second state) may be changed to the second state (or the first state) in response to an external force applied to the first housing 210 and/or the second housing 220 to move the second housing 220 with respect to the first housing 210. For example, the first state (or the second state) may be changed to the second state (or the first state) in response to a user input identified from an external electronic device (e.g., earbuds or a smart watch) connected to the electronic device 101. However, it is not limited thereto.

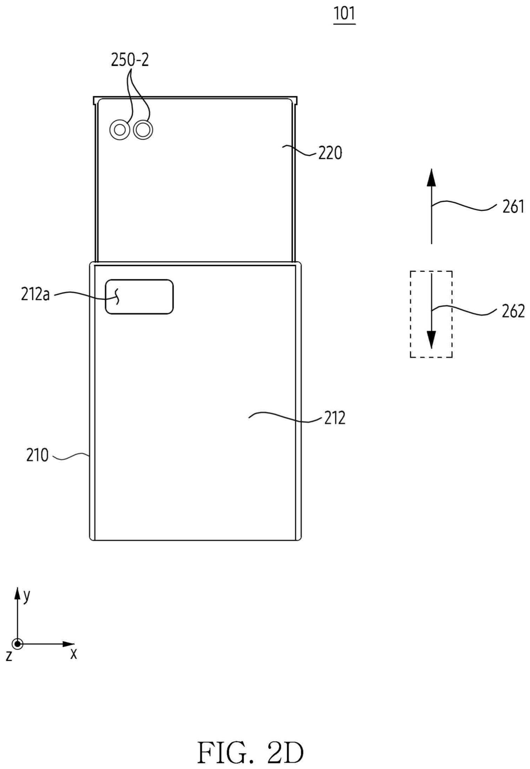

The second state may be exemplified via the description of FIGS. 2C and 2D.

FIG. 2C is a top plan view of an exemplary electronic device in a second state.

Referring to FIG. 2C, the electronic device 101 may be in the second state. For example, in the second state, the second housing 220 may be movable relative to the first housing 210 in the second direction 262 of the first direction 261 and the second direction 262. For example, in the second state, the second housing 220 may not be movable in the first direction 261 relative to the first housing 210.

For example, in the second state, the display 230 may provide the display area having the largest size. For example, in the second state, the display area may correspond to a region 230c including the region 230a and the region 230b. For example, the region 230b, which was included in the first housing 210 in the first state, may be visually exposed in the second state. For example, in the second state, the region 230a may include a planar portion. However, it is not limited thereto. For example, the region 230a may include a curved portion extending from the planar portion and positioned in an edge portion. For example, in the second state, the region 230b may include a planar portion of the planar portion and a curved portion, unlike the region 230a in the first state. However, it is not limited thereto. For example, the region 230b may include a curved portion extending from the planar portion of the region 230b and positioned in an edge portion.

For example, the second state may be referred to as a slide-out state or an open state in terms of at least a part of the second housing 220 being positioned outside the first housing 210. For example, the second state may be referred to as an extended state in terms of providing the display area having the largest size. However, it is not limited thereto.

For example, when a state of the electronic device 101 is changed from the first state to the second state, the first image sensor 250-1 may move with the region 230a in accordance with movement of the second housing 220 in the first direction 261. For example, although not illustrated in FIG. 2C, when the state of the electronic device 101 is changed from the first state to the second state, the one or more second image sensors 250-2 may be moved in accordance with the movement of the second housing 220 in the first direction 261. For example, a relative positional relationship between the one or more second image sensors 250-2 and the structure exemplified via the description of FIG. 2B may be changed in accordance with the movement of the one or more second image sensors 250-2. For example, the change in the relative positional relationship may be exemplified via FIG. 2D.

FIG. 2D is a bottom view of an exemplary electronic device in a second state.

Referring to FIG. 2D, in the second state, the one or more second image sensors 250-2 may be positioned outside the structure. For example, in the second state, the one or more second image sensors 250-2 may be positioned outside the opening 212a in the plate 212. For example, since the one or more second image sensors 250-2 are positioned outside the opening 212a in the second state, the one or more second image sensors 250-2 may be visually exposed in the second state. For example, since the one or more second image sensors 250-2 are positioned outside the structure in the second state, the relative positional relationship in the second state may be different from the relative positional relationship in the first state.

For example, in a case that the electronic device 101 does not include the structure, such as the opening 212a, the one or more second image sensors 250-2 in the second state may be visually exposed, unlike the one or more second image sensors 250-2 in the first state.

Although not illustrated in FIGS. 2A, 2B, 2C, and 2D, the electronic device 101 may be in an intermediate state between the first state and the second state. For example, a size of the display area in the intermediate state may be larger than a size of the display area in the first state and smaller than a size of the display area in the second state. For example, the display area in the intermediate state may correspond to a region including the region 230a and a part of the region 230b. For example, in the intermediate state, a part of the region 230b may be exposed, and another part (or remaining part) of the region 230b may be covered by the first housing 210 or rolled into the first housing 210. However, it is not limited thereto.

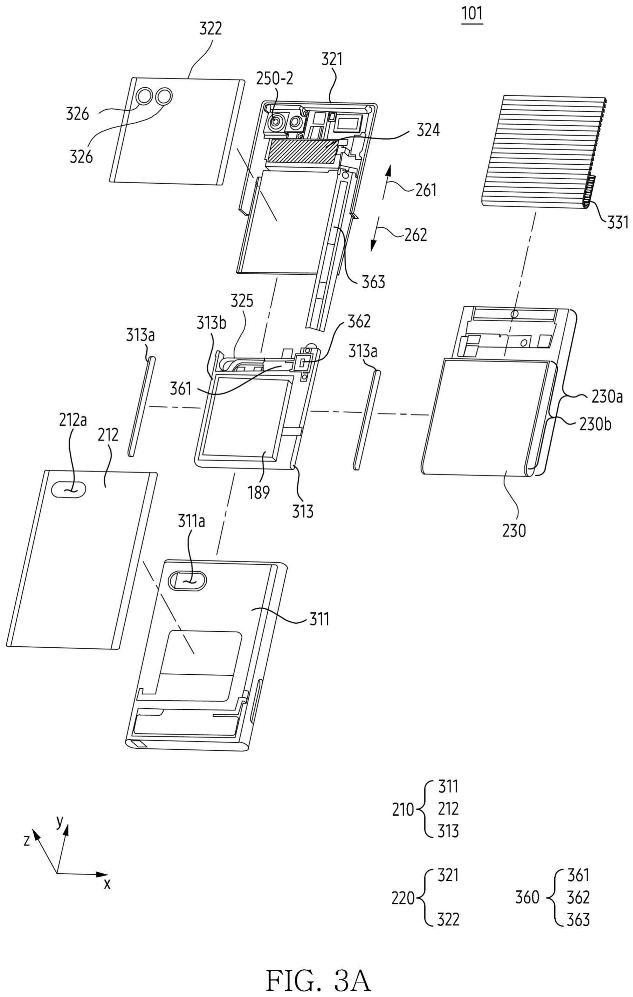

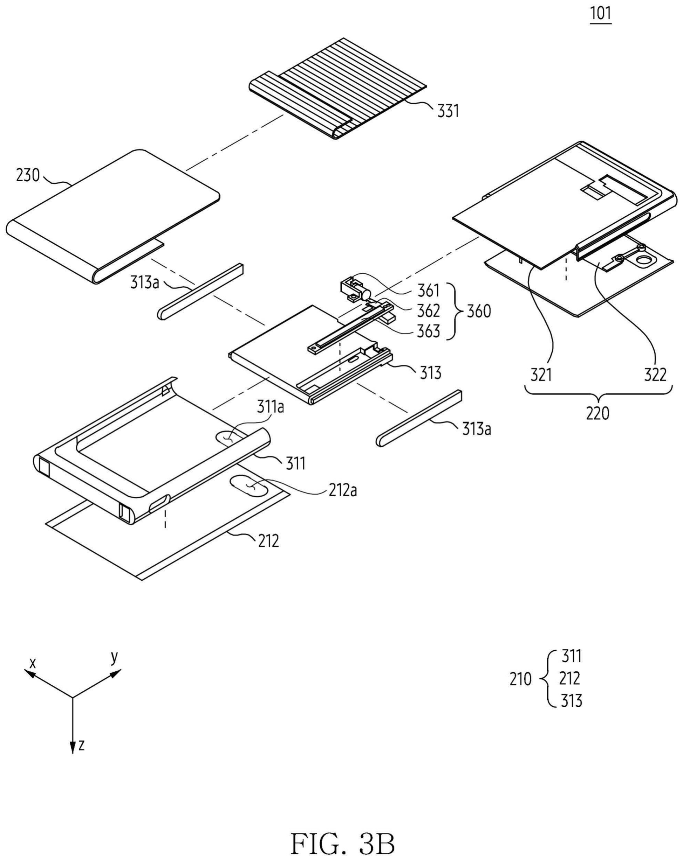

Referring back to FIG. 1, the electronic device 101 may include structures for moving a second housing (e.g., the second housing 220 of FIG. 2A) of the electronic device 101 with respect to a first housing (e.g., the first housing 210 of FIG. 2A) of the electronic device 101. For example, the structures may be exemplified via the description of FIGS. 3A and 3B.

FIGS. 3A and 3B are exploded perspective views of an exemplary electronic device.

Referring to FIGS. 3A and 3B, an electronic device 101 may include a first housing 210, a second housing 220, a display 230, and a drive unit 360.

For example, the first housing 210 may include a book cover 311, a plate 212, and a frame cover 313.

For example, the book cover 311 may at least partially form a lateral side portion of an outer side of the electronic device 101. For example, the book cover 311 may at least partially form a rear side portion of the outer side. For example, the book cover 311 may include an opening 311a for one or more second image sensors 250-2. For example, the book cover 311 may include a side supporting the plate 212. For example, the book cover 311 may be coupled to the plate 212. For example, the book cover 311 may include the frame cover 313. For example, the book cover 311 may be coupled to the frame cover 313.

For example, the plate 212 may at least partially form a rear side portion of the outer side. For example, the plate 212 may include an opening 212a for the one or more second image sensors 250-2. For example, the plate 212 may be disposed on the side of the book cover 311. For example, the opening 212a may be aligned with the opening 311a.

For example, the frame cover 313 may be at least partially surrounded by the book cover 311.

For example, the frame cover 313 may be at least partially surrounded by the display 230. For example, the frame cover 313 may be at least partially surrounded by the display 230, but a position of the frame cover 313 may be maintained independently of movement of the display 230. For example, the frame cover 313 may be arranged in association with at least some of components of the display 230. For example, the frame cover 313 may include rails 313a that provide (or guide) a path for movement of at least one component of the display 230.

For example, the frame cover 313 may be coupled to at least one component of the electronic device 101. For example, the frame cover 313 may support a rechargeable battery 189. For example, the battery 189 may be supported via a recess or a hole in a side 313b of the frame cover 313. For example, the frame cover 313 may be coupled to an end of a flexible printed circuit board 325 on a side of the frame cover 313. For example, although not explicitly illustrated in FIGS. 3A and 3B, another end of the FPCB 325 may be connected to a PCB 324 via at least one connector. For example, the PCB 324 may be electrically connected to another PCB (not illustrated in FIGS. 3A and 3B) that supplies power to a motor 361 via the FPCB 325.

For example, the frame cover 313 may be coupled to at least one structure of the electronic device 101 for a plurality of states including the first state and the second state. For example, the frame cover 313 may fasten the motor 361 of the drive unit 360.

For example, the second housing 220 may include a front cover 321 and a slide cover 322.

For example, the front cover 321 may be at least partially surrounded by the display 230. For example, the front cover 321 may be coupled to at least a part of a region 230a of the display 230 surrounding the front cover 321, unlike the frame cover 313, such that the display 230 is moved along the second housing 220 moved with respect to the first housing 210.

For example, the front cover 321 may be coupled to at least one component of the electronic device 101. For example, the front cover 321 may be coupled to the printed circuit board (PCB) 324 including components of the electronic device 101. For example, the PCB 324 may include a processor 120 (not illustrated in FIGS. 3A and 3B). For example, the front cover 321 may include the one or more second image sensors 250-2.

For example, the front cover 321 may be coupled to at least one structure of the electronic device 101 for a plurality of states including the first state and the second state. For example, the front cover 321 may fasten a rack gear 363 of the drive unit 360.

For example, the front cover 321 may be coupled to the slide cover 322.

For example, the slide cover 322 may be coupled to the front cover 321 to protect at least one component of the electronic device 101 coupled in the front cover 321 and/or at least one structure of the electronic device 101 coupled in the front cover 321. For example, the slide cover 322 may include a structure for the at least one component. For example, the slide cover 322 may include one or more openings 326 for the one or more second image sensors 250-2. For example, the one or more openings 326 may be aligned with the one or more second image sensors 250-2 disposed on the front cover 321. For example, a size of each of the one or more openings 326 may correspond to a size of each of the one or more second image sensors 250-2.

For example, the display 230 may include a support member 331. For example, the support member 331 may include a plurality of bars. For example, the plurality of bars may be coupled with each other.

For example, the drive unit 360 may include the motor 361, a pinion gear 362, and the rack gear 363.

For example, the motor 361 may operate based on power from the battery 189. For example, the power may be provided to the motor 361 in response to the predefined user input.

For example, the pinion gear 362 may be coupled to the motor 361 via a shaft. For example, the pinion gear 362 may be rotated based on the operation of the motor 361 transmitted via the shaft.

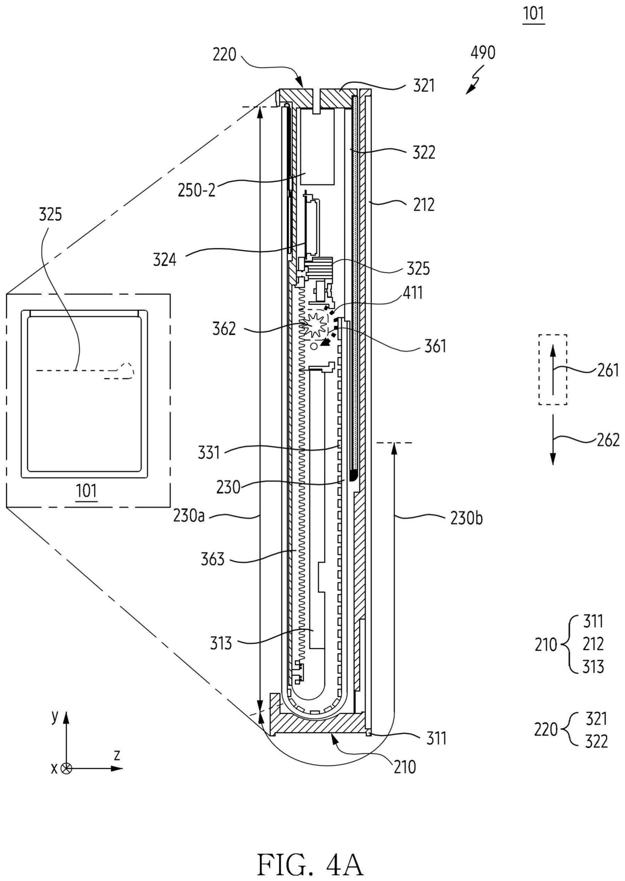

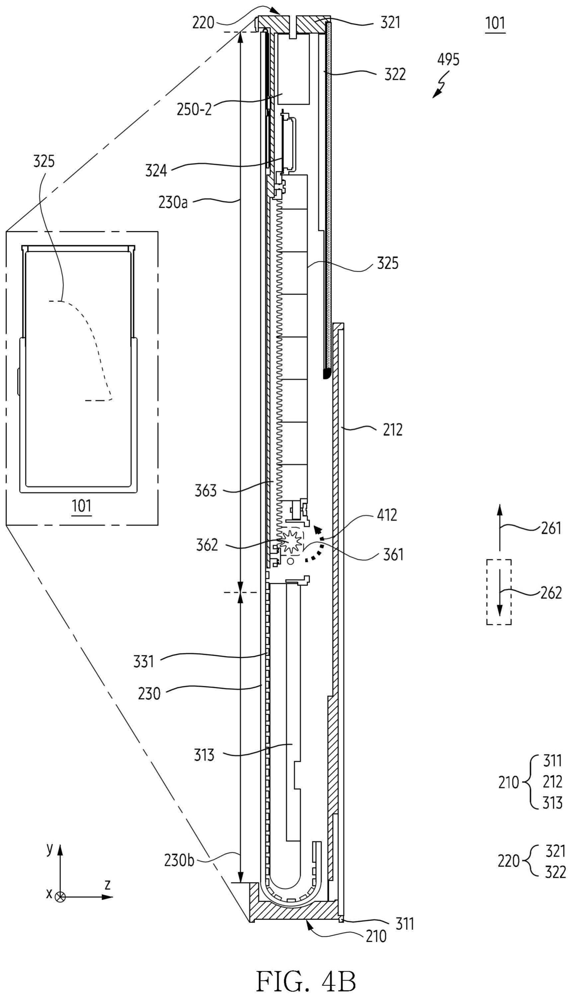

For example, the rack gear 363 may be arranged in association with the pinion gear 362. For example, teeth of the rack gear 363 may be engaged with teeth of the pinion gear 362. For example, the rack gear 363 may move in a first direction 261 or a second direction 262 in accordance with rotation of the pinion gear 362. For example, the second housing 220 may be moved in the first direction 261 or the second direction 262 by the rack gear 363 that moves in accordance with the rotation of the pinion gear 362 by the operation of the motor 361. For example, the first state of the electronic device 101 may be changed to a state (e.g., the one or more intermediate states or the second state) different from the first state via the movement of the second housing 220 in the first direction 261. For example, the second state of the electronic device 101 may be changed to a state (e.g., the one or more intermediate states or the first state) different from the second state via the movement of the second housing 220 in the second direction 262. For example, the first state being changed to the second state by the drive unit 360 and the second state being changed to the first state by the drive unit 360 may be exemplified via FIGS. 4A and 4B.

FIG. 4A is a cross-sectional view of an exemplary electronic device in a first state. FIG. 4B is a cross-sectional view of an exemplary electronic device in a second state.

Referring to FIGS. 4A and 4B, a motor 361 may be operated based at least in part on the predefined user input received in a state 490, which is the first state. For example, a pinion gear 362 may be rotated in a first rotation direction 411 based at least in part on the operation of the motor 361. For example, a rack gear 363 may be moved in a first direction 261 based at least in part on the rotation of the pinion gear 362 in the first rotation direction 411. For example, since a front cover 321 in a second housing 220 fastens the rack gear 363, the second housing 220 may be moved in the first direction 261 based at least in part on the movement of the rack gear 363 in the first direction 261. For example, since the front cover 321 in the second housing 220 is coupled to at least a part of a region 230a of a display 230 and fastens the rack gear 363, the display 230 may be moved based at least in part on the movement of the rack gear 363 in the first direction 261. For example, the display 230 may be moved along rails 313a. For example, a shape of at least some of the plurality of bars of a support member 331 of the display 230 may change when the state 490 is changed to a state 495, which is the second state.

For example, a region 230b of the display 230 may be moved in accordance with the movement of the display 230. For example, when the state 490 is changed to the state 495 in accordance with the predefined user input, the region 230b may be moved via a space between a book cover 311 and a frame cover 313. For example, the region 230b in the state 495 may be visually exposed, unlike the region 230b rolled into the space in the state 490.

For example, since the front cover 321 in the second housing 220 may be coupled to a PCB 324 connected to the other end of an FPCB 325 and fastens the rack gear 363, a shape of the FPCB 325 may change when the state 490 is changed to the state 495.

The motor 361 may be operated based at least in part on the predefined user input received in the state 495. For example, the pinion gear 362 may be rotated in a second rotation direction 412 based at least in part on the operation of the motor 361. For example, the rack gear 363 may be moved in a second direction 262 based at least in part on the rotation of the pinion gear 362 in the second rotation direction 412. For example, since the front cover 321 in the second housing 220 fastens the rack gear 363, the second housing 220 may be moved in the second direction 262 based at least in part on the movement of the rack gear 363 in the second direction 262. For example, since the front cover 321 in the second housing 220 may be coupled to at least a part of the region 230a of the display 230 and fastens the rack gear 363, the display 230 may be moved based at least in part on the movement of the rack gear 363 in the second direction 262. For example, the display 230 may be moved along the rails 313a. For example, a shape of at least some of the plurality of bars of the support member 331 of the display 230 may change when the state 495 is changed to the state 490.

For example, the region 230b of the display 230 may be moved in accordance with the movement of the display 230. For example, when the state 495 is changed to the state 490 in accordance with the predefined user input, the region 230b may be moved via the space between the book cover 311 and the frame cover 313. For example, the region 230b in the state 490 may be rolled into the space, unlike the region 230b exposed in the state 495.

For example, since the front cover 321 in the second housing 220 may be coupled to the PCB 324 connected to the other end of the FPCB 325 and fastens the rack gear 363, the shape of the FPCB 325 may change when the state 495 is changed to the state 490.

FIGS. 2A to 4B illustrate the electronic device 101 in which a height of the display area is changed and a width of the display area is maintained when the first state (or the second state) is changed to the second state (or the first state) in a portrait mode, but this is for convenience of explanation. For example, when the first state (or the second state) is changed to the second state (or the first state) in the portrait mode, the electronic device 101 may be implemented such that the height of the display area is maintained and the width of the display area is changed.

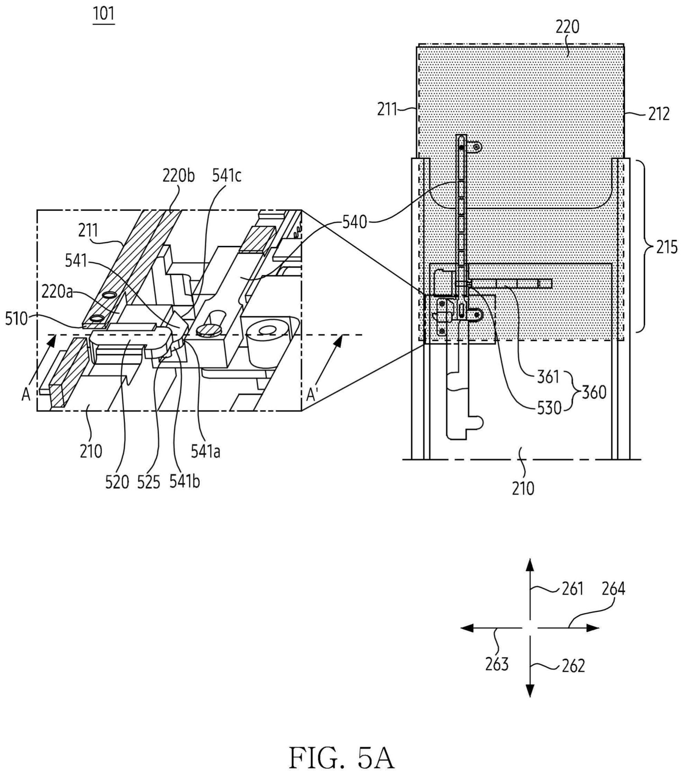

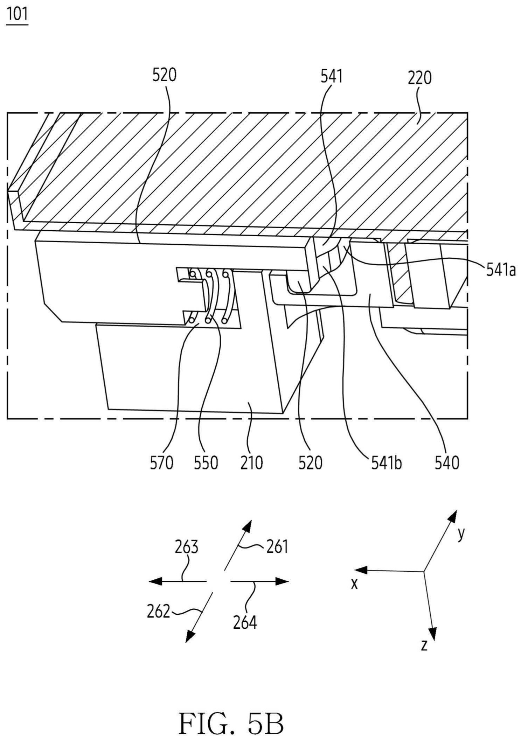

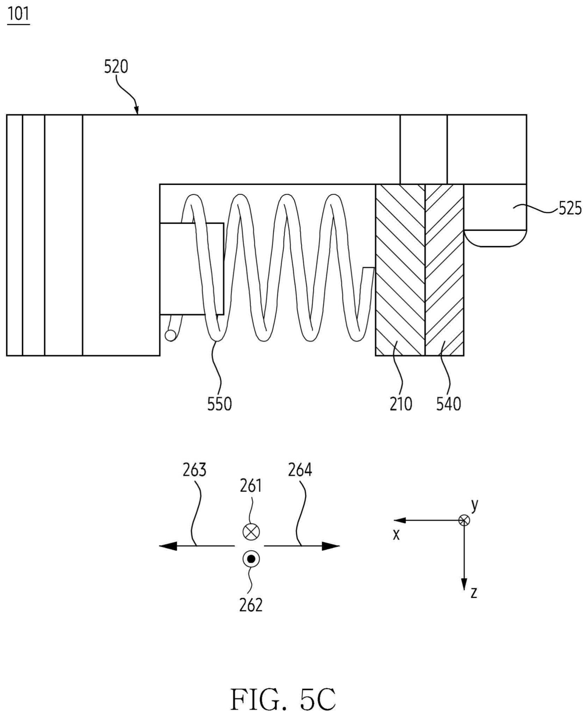

FIG. 5A illustrates a part of an exemplary electronic device. FIG. 5B is a partial cross-sectional view of an exemplary electronic device cut along line A-A' of FIG. 5A. FIG. 5C illustrates a part of an exemplary electronic device.

Referring to FIGS. 5A, 5B, and 5C, an electronic device 101 may include a first housing 210, a second housing 220, and a display (e.g., the display 230 of FIG. 2A). The first housing 210 may include a support portion 215 and a stopper 520. The second housing 220 may include a fastening groove 510.

According to an embodiment, the second housing 220 may be movable relative to the first housing 210 in a first direction 261 and a second direction 262 opposite to the first direction 261. For example, the second housing 220 may be coupled to the first housing 210 to be movable relative to the first housing 210 along the first direction 261 parallel to a y-axis or the second direction 262 opposite to the first direction 261. For example, the second housing 220 may be coupled to the first housing 210 to be slidable relative to the first housing 210 in the first direction 261 or the second direction 2620 opposite to the first direction 261. For example, when referring to FIGS. 2A, 2B, 2C, 2D, 4A, and 4B together, the second housing 220 may slide and move relative to the first housing 210 in the first direction 261 parallel to the y-axis from a first state. As the second housing 220 moves relative to the first housing 210 in the first direction 261, the second housing 220 may be configured to change the electronic device 101 from the first state to a second state. For example, the second housing 220 may slide and move from the second state relative to the first housing 210 in the second direction 262 parallel to the y-axis and opposite to the first direction 261. As the second housing 220 moves relative to the first housing 210 in the second direction 262, the second housing 220 may be configured to change the electronic device 101 from the second state to the first state.

According to an embodiment, the display 230 may include a first region (e.g., the region 230a of FIG. 2A) disposed on the second housing 220 and a second region (e.g., the region 230b of FIG. 2C) that extends from the first region 230a and is rolled into the first housing 210 or exposed outside the first housing 210 along the second housing 220 moved with respect to the first housing 210.

For example, when referring to FIGS. 2A, 2B, and 4A together, the first region 230a may be exposed to the outside by being disposed on the second housing 220. In the first state, the second region 230b may be disposed in the first housing 210. While changing from the first state to the second state, since the second housing 220 moves relative to the first housing 210 in the first direction 261, the first region 230a may move in the first direction 261 along the second housing 220. Since the second region 230b extends from the first region 531, the second region 230b may be exposed to the outside by moving in accordance with the first region 230a.

For example, when referring to FIGS. 2C, 2D, and 4B together, in the second state, the second region 230b may be exposed to the outside. While changing from the second state to the first state, since the second housing 220 moves relative to the first housing 210 in the second direction 262 opposite to the first direction 261, the first region 230a may move in the second direction 262 along the second housing 220. Since the second region 230b extends from the first region 230a, the second region 230b may be rolled into the first housing 210 by moving along the first region 230a.

The first state of the electronic device 101 may be defined as a state (e.g., the state 490 of FIG. 4A) in which a display area of the display 230 exposed to the outside of the first housing 210 has a minimum size as the second region 230b of the display 230 is rolled into the first housing 210. The first state may be referred to as a slide-in state or a closed state. The second state of the electronic device 101 may be defined as a state (the state 495 of FIG. 4B) in which the display area (e.g., the region 230c of FIG. 2C) of the display 230 exposed to the outside of the first housing 210 has a maximum size by exposing the second region 230b of the display 230 to the outside of the first housing 210. The second state may be referred to as a slide-out state or an open state. For example, the first state may be a state in which the second housing 220 is movable relative to the first housing 210 in the first direction 261. For example, the second state may be a state in which the second housing 220 is movable relative to the first housing 210 in a second direction 262 opposite to the first direction 261.

For example, although not illustrated, in an intermediate state between the first state and the second state, a part of the second region 230b may be exposed to the outside. The remainder of the second region 230b may be disposed in the first housing 210. Since the second region 230b may be deformable to be rolled into the first housing or exposed to the outside of the first housing 210, the second region 230b may be configured to provide a plurality of states to the electronic device 101.

According to an embodiment, the support portion 215 may be a portion that overlaps a part of the second housing 220 in a plurality of states including the first state of the electronic device 101 in which the display area of the display 230 exposed to the outside of the first housing 210 has the minimum size and the second state of the electronic device 101 in which the display area has the maximum size. For example, the support portion 215 may be a portion that contacts the second housing 220 in the plurality of states including the first state and the second state of the electronic device 101. For example, the support portion 215 may include a structure that prevents the second housing 220 from moving relative to the first housing 210 in the first direction 261 and from being separated from the first housing 210, from the second state. For example, the support portion 215 may be a portion that supports the second housing 220 among the first housing 210 in the second state. The first housing 210 may reduce a separation of the second housing 220 from the first housing 210 and support the second housing 220 in the plurality of states of the electronic device 101 including the first state and the second state by including the support portion 215.

According to an embodiment, the fastening groove 510 may be formed in a portion facing the support portion 215 of the first housing 210 in the second state. The fastening groove 510 may be formed in a first edge 221 and/or a second edge 222 of the second housing 220 extending in a direction parallel to a first direction 261 in which the second housing 220 moves with respect to the first housing 210 and a second direction 262 opposite to the first direction 261. For example, in the second state, the fastening groove 510 may be faced away from the support portion 215 of the first housing 210. For example, in the second state, the fastening groove 510 may contact the support portion 215 of the first housing 210. For example, the fastening groove 510 may be disposed in the first edge 221 and/or the second edge 222, thereby moving relative to the first housing 210 in the first direction 261 or the second direction 262 as the first edge 221 and/or the second edge 222 move relative to the first housing 210 in the first direction 261 or the second direction 262 along the second housing 220.

According to an embodiment, the stopper 520 may be positioned in the support portion 215 of the first housing 210 and may be paired with the fastening groove 510 of the second housing 220. For example, the stopper 520 may be configured to be fastened to the fastening groove 510. For example, the stopper 520 may have a shape corresponding to a shape of the fastening groove 510. For example, the stopper 520 may be configured to move toward the fastening groove 510 when the fastening groove 510 is positioned at a point corresponding to a point where the stopper 520 is disposed as the second housing 220 moves with respect to the first housing 210. At least a part of the stopper 520 may be positioned inside the fastening groove 510 by moving toward the fastening groove 510. The stopper 520 may be fastened to the fastening groove 510 by positioning the at least part of the stopper 520 inside the fastening groove 510. The stopper 520 may be configured such that the second housing 220 is fastened to the first housing 210 by fastening with the fastening groove 510.

For example, the fastening groove 510 may be disposed in the first edge 221 of the second housing 220. The stopper 520 may be disposed in a portion of the support portion 215 of the first housing 210 adjacent to the first edge 221. As the second housing 220 moves with respect to the first housing 210, the first edge 221 moves, such that the fastening groove 510 may be positioned at the point corresponding to the point where the stopper 520 is disposed. At least a part of the stopper 520 may be positioned inside the fastening groove 510 by moving in a third direction 263 toward the first edge 221.

It has been described that the fastening groove 510 is disposed in the first edge 221, but is not limited thereto. For example, the fastening groove 510 may be disposed in the second edge 222 facing the first edge 221 of the second housing 220. The stopper 520 may be disposed in a portion of the support portion 215 of the first housing 210 adjacent to the second edge 222, by being paired with the fastening groove 510. As the second housing 220 moves with respect to the first housing 210, the second edge 222 moves, such that the fastening groove 510 may be positioned at the point corresponding to the point where the stopper 520 is disposed. At least a part of the stopper 520 may be positioned inside the fastening groove 510 by moving in a fourth direction 264 toward the second edge 222. However, it is not limited thereto.

According to an embodiment, the fastening groove 510 may be configured to be positioned at the point corresponding to the point where the stopper 520 is disposed in the second state of the electronic device 101.

According to an embodiment, in the second state of the electronic device 101, the stopper 520 may be configured to provide the electronic device 101 with a fastened state in which at least a part of the stopper 520 is positioned inside the fastening groove 510 to fasten the second housing 220 to the first housing 210, and a fastening-release state in which the stopper 520 is positioned outside the fastening groove 510 to release the fastening between the second housing 220 and the first housing 210.

For example, as at least a part of the stopper 520 is positioned in the fastening groove 510 in the second state, the fastened state may be a state in which the second housing 220 is fastened to the first housing 210 by the stopper 520. For example, as the stopper 520 is positioned outside the fastening groove 510 in the second state, the fastening-release state may be a state in which the second housing 220 is movable with respect to the first housing 210.

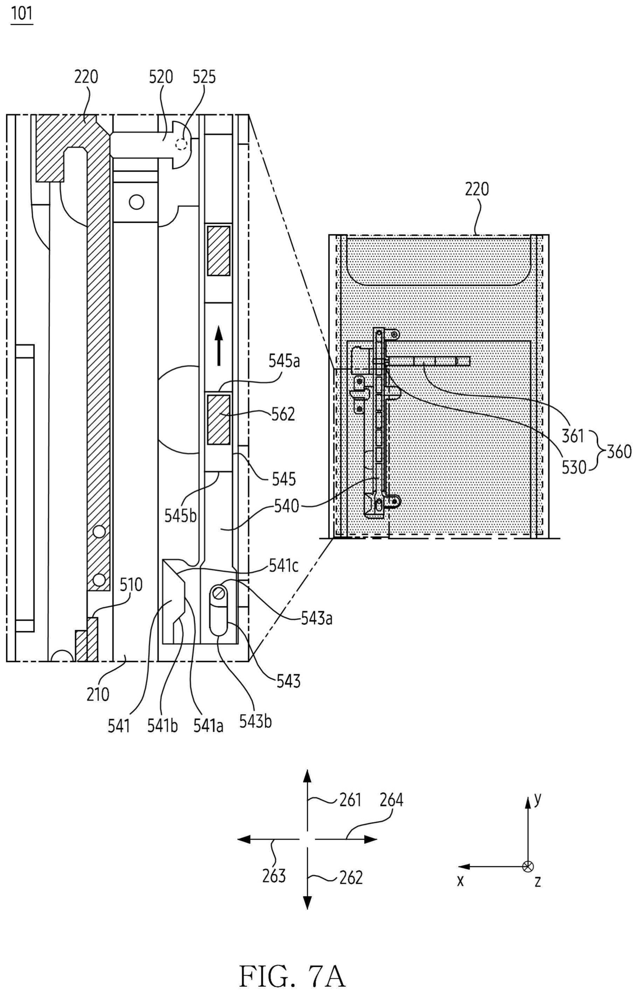

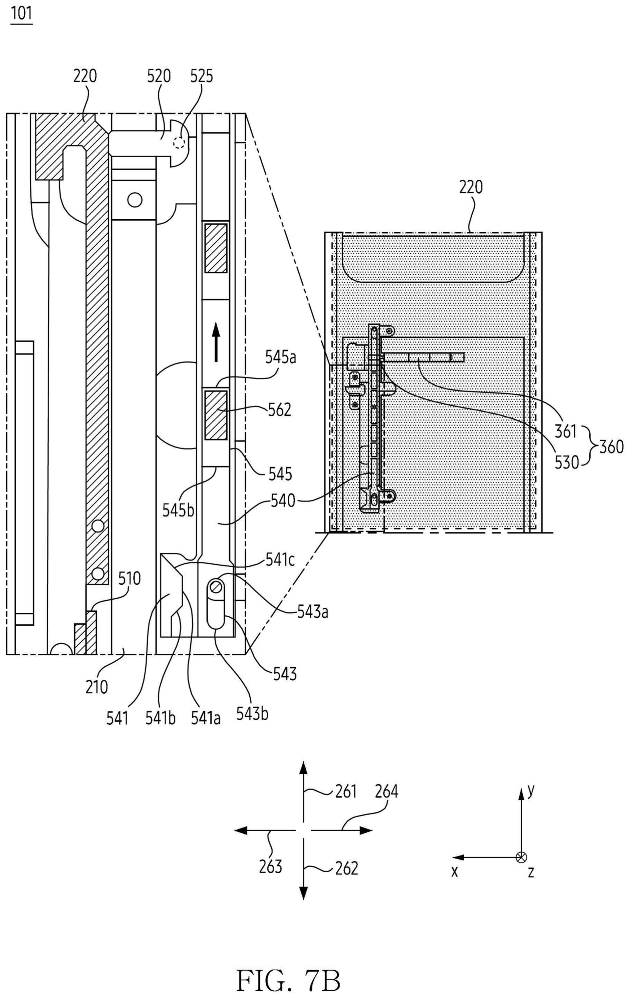

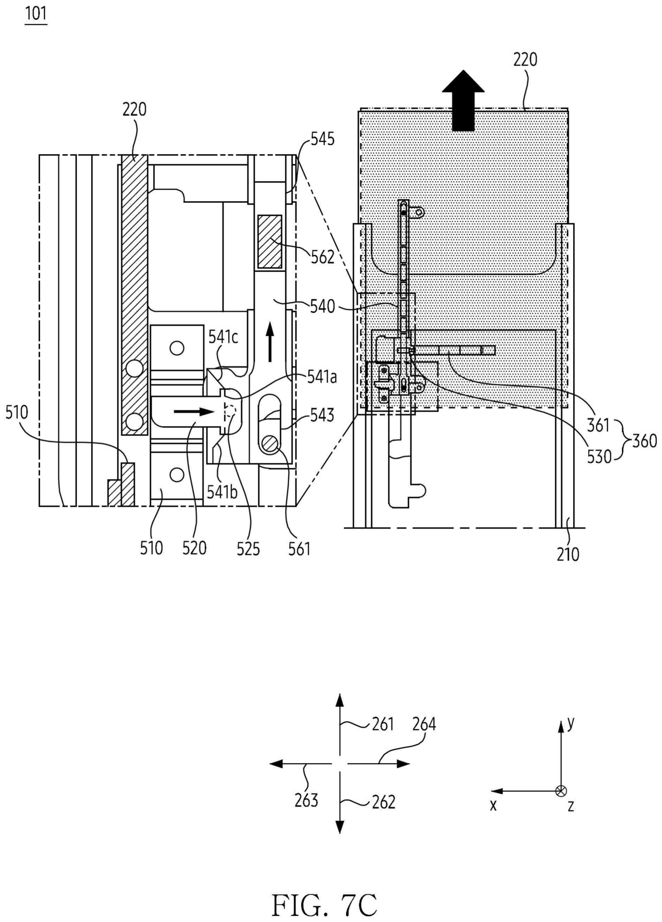

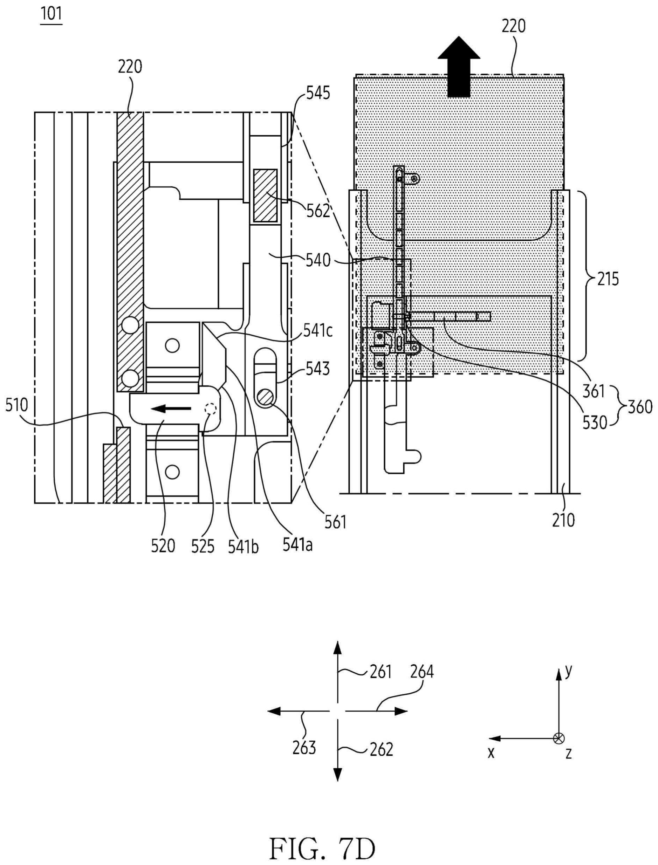

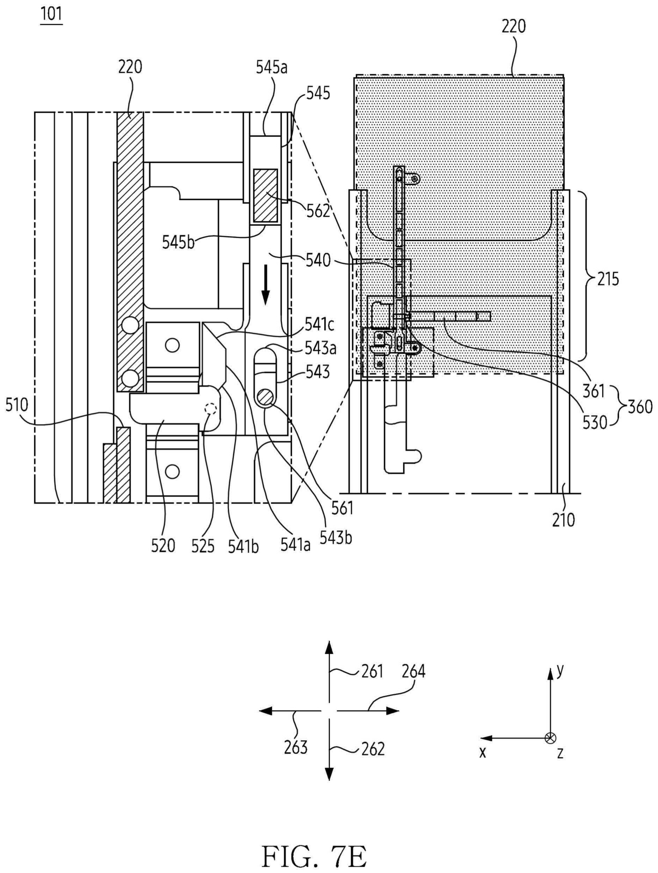

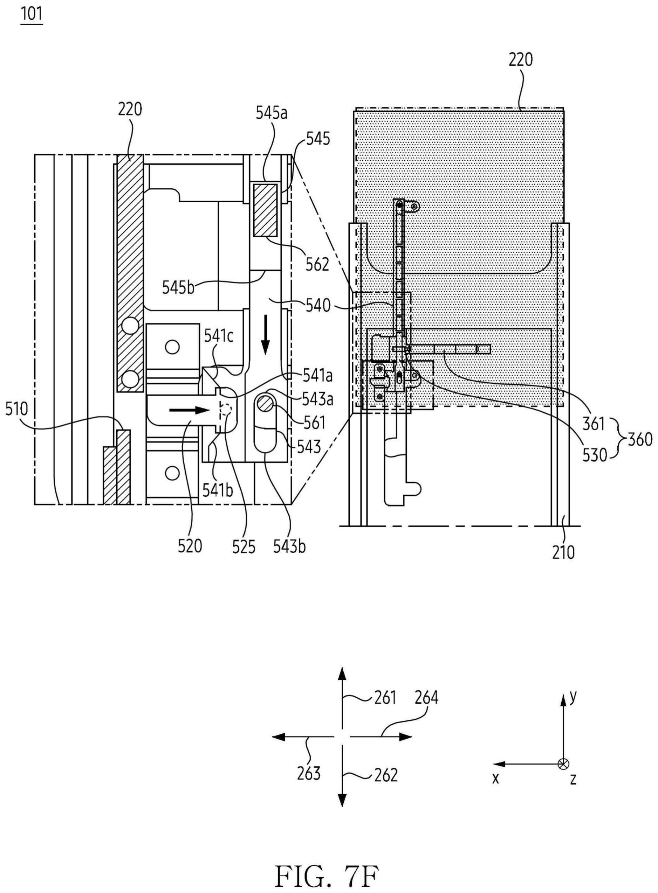

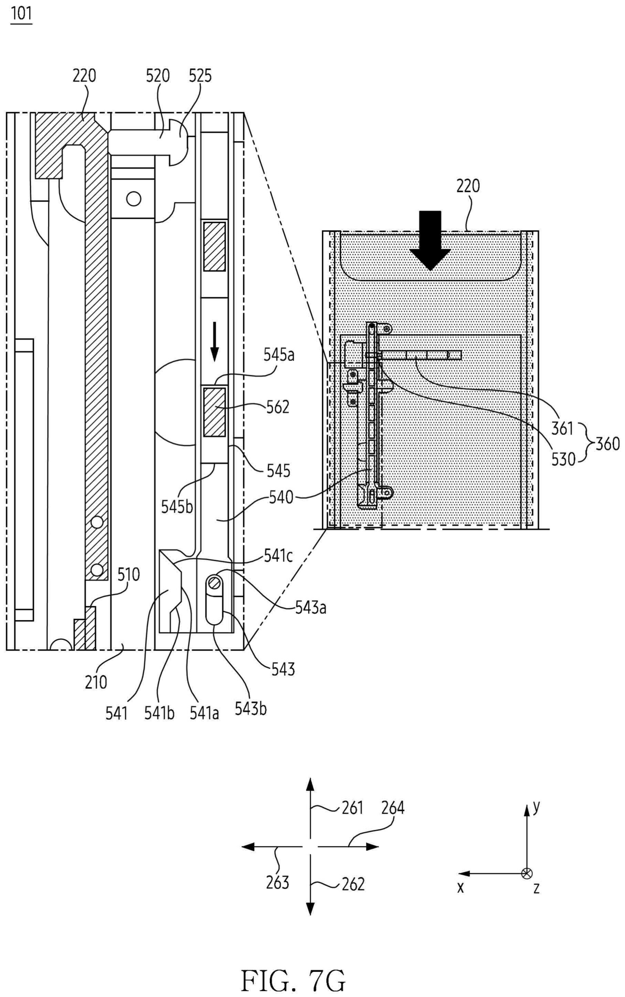

For example, the stopper 520 may be movable with respect to the first housing 210 and the second housing 220 in the second state. For example, as the stopper 520 is configured to move relative to the first housing 210 and the second housing 220 in the third direction 263 and the fourth direction 264 opposite to the third direction in the second state, at least a part of the stopper 520 may be positioned inside the fastening groove 510 or outside the fastening groove 510 in the second state. Regarding the stopper 520 being movable with respect to the second housing 220 in the second state, it will be described later in FIGS. 7A, 7B, 7C, 7D, 7E, 7F, and 7G. As the stopper 520 provides the electronic device 101 with the fastened state in the second state, the stopper 520 may reduce a separation of the second housing 220 from the first housing 210 when the electronic device 101 receives an external impact in the second state, and reduce damage to internal components (e.g., a motor 361, a first gear 362, and a second gear 363) of the electronic device 101 by the external impact in the second state.

According to an embodiment, the electronic device 101 may further include a drive unit 360 coupled to the first housing 210, including the motor 361 and the first gear 530 rotatable by driving the motor 361. The electronic device 101 may include the second gear 540 in the second housing 220 that is engaged with the first gear 530 and configured to move the second housing 220 relative to the first housing 210 in the first direction 261 and the second direction 262 opposite to the first direction 261 by the driving the motor 361. The second gear 540 may be movable with respect to the second housing 220 in the second state of the electronic device 101.

For example, the first gear 530 may be referred to as the pinion gear 362 of FIG. 3A. The second gear 540 may be referred to as the rack gear 363 of FIG. 3A. However, it is not limited thereto.

For example, the first gear 530 may be rotated in a first rotation direction (e.g., the first rotation direction 411 of FIG. 4A) by driving the motor 361. The second gear 540 engaged with the first gear 530 may be moved in the first direction 261 by the rotation of the first gear 530 in the first rotation direction 411. The second housing 220 may be moved relative to the first housing 210 in the first direction 261 by the second gear 540 moved in the first direction 261. The electronic device 101 may be configured to change from the first state to the second state by the second housing 220 moved relative to the first housing 210 in the first direction 261.

For example, the first gear 530 may be rotated in a second rotation direction (e.g., the second rotation direction 412 of FIG. 4B) opposite to the first rotation direction 411 by driving the motor 361. The second gear 540 engaged with the first gear 530 may be moved in the second direction 262 opposite to the first direction 261 by the rotation of the first gear 530 in the second rotation direction 412. The second housing 220 may be moved relative to the first housing 210 in the second direction 262 by the second gear 540 moved in the second direction 262. The electronic device 101 may be configured to change from the second state to the first state by the second housing 220 moved relative to the first housing 210 in the second direction 262.

For example, the second gear 540 may be configured to move with respect to the second housing 220 in the second state. The second gear 540 may be configured to move the stopper 520 with respect to the second housing 220 in the second state, by being configured to move with respect to the second housing 220.

According to an embodiment, the first housing 210 may further include an elastic structure 550 configured to press the stopper 520 toward the fastening groove 510 in the second state of the electronic device 101. The second gear 540 may include a protrusion structure 541 configured to change the electronic device 101 from the fastened state to the fastening-release state by pressing the stopper 520 in a direction different from a pressing direction of the elastic structure 550, as the second gear 540 moves with respect to the second housing 220 in the second state.

For example, the elastic structure 550 may be configured to press the stopper 520 toward a structure (e.g., the first edge 221 of the second housing 220) in which the fastening groove 510 is formed in the plurality of states including the first state and the second state of the electronic device 101. When the fastening groove 510 is positioned at the point corresponding to the point where the stopper 520 is disposed in the second state by movement of the second housing 220, the elastic structure 550 may move the stopper 520 toward the fastening groove 510 by pressing the stopper 520 toward the fastening groove 510. As the stopper 520 is moved toward the fastening groove 510 by the elastic structure 550, at least a part of the stopper 520 may be positioned in the fastening groove 510.

For example, the elastic structure 550 may be pressed by the second housing 220 in states (e.g., the first state) other than the second state of the electronic device 101. For example, in the states other than the second state, since the fastening groove 510 is separated from a position corresponding to a position of the stopper 520 in accordance with movement of the second housing 220, the stopper 520 may contact another portion different from a portion where the fastening groove 510 of the second housing 220 is formed. As the stopper 520 is pressed by the other portion of the second housing 220, the elastic structure 550 may be pressed by the second housing 220. The elastic structure 550 may include a spring, but is not limited thereto.

For example, the protrusion structure 541 may be a structure that contacts the stopper 520 of the second gear 540 in the second state. The protrusion structure 541 may have a curved surface to guide movement of the stopper 520 while moving along the second gear 540, but is not limited thereto.

For example, the protrusion structure 541 may move along the second gear 540 with respect to the second housing 220 to press the stopper 520 in a direction different from a direction toward the fastening groove 510, such that the stopper 520 that is at least partially positioned in the fastening groove 510 is positioned outside the fastening groove 510 by being pressed in the direction toward the fastening groove 510 by the elastic structure 550. As the stopper 520 is pressed by the moving protrusion structure 541, the elastic structure 550 may be compressed. The stopper 520 may be moved to be positioned outside the fastening groove 510, by being pressed in the direction different from the direction toward the fastening groove 510 by the protrusion structure 541. The second gear 540 may be configured such that the stopper 520 provides the electronic device 101 with the fastened state and the fastening-release state in the second state by including the protrusion structure 541 movable with respect to the second housing 220 with the second gear 540 in the second state.

According to an embodiment, the elastic structure 550 may be configured to press the stopper 520 relative to the first housing 210 in the third direction 263. The protrusion structure 541 may include guide sides 541a, 541b, and 541c for guiding movement of the stopper 520. The protrusion structure 541 may be configured to change the electronic device 101 from the fastened state to the fastening-release state by pressing the stopper 520 in the fourth direction 264 opposite to the third direction 263 as it moves with respect to the second housing 220 in the second state of the electronic device 101.

For example, the fastening groove 510 may be disposed in the first edge 221 of the second housing 220. The elastic structure 550 may press the stopper 520 toward the first edge 221 in the third direction 263. As the second housing 220 moves relative to the first housing 210 in the first direction 261 while the electronic device 101 is changed from the first state to the second state, the first edge 221 may move in the first direction 261 such that the fastening groove 510 faces the stopper 520. When the electronic device 101 completes a change from the first state to the second state, the elastic structure 550 may be configured such that the stopper 520 provides the electronic device 101 with the fastened state by moving the stopper 520 toward the fastening groove 510 in the third direction 263.

For example, in order to change from the second state to the first state, the electronic device 101 may change from the fastened state to the fastening-release state in the second state. In the second state, the second gear 540 may be moved relative to the second housing 220 in the second direction 262 by rotation of the first gear 530. The protrusion structure 541 may press the stopper 520 in the fourth direction 264 opposite to the third direction 263 by being moved relative to the second housing 220 in the second direction 262 along the second gear 540. The stopper 520 may be positioned outside the fastening groove 510 while being moved relative to the second housing 220 in the fourth direction 264 along the guide sides 541a, 541b, and 541c of the protrusion structure 541 moved with respect to the second housing 220. The elastic structure 550 may be compressed in the fourth direction 264 by the stopper 520 which is moved relative to the second housing 220 in the fourth direction 264 by the protrusion structure 541. The protrusion structure 541 may be configured to change the electronic device 101 from the fastened state to the fastening-release state to change the electronic device 101 from the second state to the first state, by being configured to move the stopper 520 in which at least a part of the stopper 520 is positioned inside the fastening groove 510 in the second state in the fourth direction 264.

According to an embodiment, the stopper 520 may include a guide structure 525 configured to move the stopper 520 relative to the first housing 210 in the third direction 263 and the fourth direction 264 opposite to the third direction 263 in accordance with movement of the protrusion structure 541 by contacting at least a part of the guide sides 541a, 541b and 541c in the second state of the electronic device 101.

For example, the guide structure 525 may be a portion of the stopper 520 that contacts the protrusion structure 541 when the fastening groove 510 moved along the second housing 220 moving with respect to the first housing 210 is positioned at a position corresponding to the point where the stopper 520 is disposed. For example, the guide structure 525 may be configured to move the stopper 520 in the third direction 263 and the fourth direction 264 opposite to the third direction 263 by moving along the guide sides 541a, 541b, and 541c. The guide structure 525 may be a portion pressed in the fourth direction 264 opposite to the third direction 263 by moving along the guide sides 541a, 541b, and 541c.

According to an embodiment, the guide structure 525 may be rotatable with respect to the stopper 520 by friction with the guide sides 541a, 541b, and 541c while moving along the guide sides 541a, 541b, and 541c. For example, the guide structure 525 may be rotated based on a z-axis, by contacting the guide sides 541a, 541b, and 541c moved in the first direction 261 or in the second direction 262 opposite to the first direction 261. However, it is not limited thereto.

According to an embodiment, the first housing 210 may further include a seating groove 570 configured to guide movement of the stopper 520 by supporting at least a part of the stopper 520 and being aligned with the fastening groove 510 in the second state.

For example, the seating groove 570 may provide a seating space for a part of the stopper 520. The elastic structure 550 may be disposed in the seating groove 570 to press the stopper 520 toward the fastening groove 510 in the second state. The seating groove 570 may guide deformation of the elastic structure 550 such that the elastic structure 550 does not separate from the support portion 215 of the first housing 210. The elastic structure 550 may be configured to move the stopper 520 toward the fastening groove 510 by pressing the part of the stopper 520 positioned in the seating groove 570 toward the fastening groove 510 in the second state. The seating groove 570 may guide the movement of the stopper 520 toward the fastening groove 510 and the deformation of the elastic structure 550 by being aligned with the fastening groove 510 when the electronic device 101 is changed from the first state to the second state.

For example, the seating groove 570 may be aligned with the fastening groove 510 formed at the first edge 221 of the second housing 220 that moves relative to the first housing 210 in the first direction 263 when the electronic device 101 is changed from the first state to the second state. The seating groove 570 may be configured such that the elastic structure 550 moves the stopper 520 in the third direction 263 by guiding the deformation of the elastic structure 550. The seating groove 570 may be configured to provide the fastened state in which the stopper 520 is at least partially positioned in the fastening groove 510 by guiding movement of the stopper 520 in the third direction 263.

For example, as the stopper 520 is moved relative to the second housing 220 in the fourth direction 264 when the electronic device 101 changes from the fastened state to the fastening-release state, the seating groove 570 may accommodate at least a part of the stopper 520 that was positioned in the fastening groove 510 in the fastened state. As the at least a part of the stopper 520 that was positioned in the fastening groove 510 is positioned in the seating groove 570, the stopper 520 may be configured to provide the electronic device 101 with the fastening-release state in which the stopper 520 is positioned outside the fastening groove 510. As the stopper 520 is moved in the fourth direction 264, the elastic structure 550 disposed in the seating groove 570 may be compressed in the fourth direction 264.

According to an embodiment, the second housing 220 may further include a first portion 220a that contacts the stopper 520 in the fastened state and extends from the fastening groove 510, and a second portion 220b extending from the first portion 220a. Rigidity of the first portion 220a may be greater than rigidity of the second portion 220b. For example, the first portion 220a may be a portion that supports the second housing 220 with respect to the first housing 210 by being supported by the stopper 520 in the fastened state. For example, a reinforcement block of a material different from the first portion 220b may be disposed in the first portion 220a, but is not limited thereto. Since the rigidity of the first portion 220a is higher than the rigidity of the second portion 220b, the electronic device 101 may reduce damage to the first portion 220a that contacts the stopper 520 by an external impact in the second state and reduce deformation of the fastening groove 510.

According to the above-described embodiment, the electronic device 101 may reduce damage to the electronic device 101 and/or a component in the electronic device 101 by an external impact in the second state, by including the stopper 520 configured to provide the electronic device 101 with the fastened state and the fastening groove 510 paired with the stopper 520 in the second state. The stopper 520 may be configured such that the second housing 220 is movable with respect to the first housing 210 when the electronic device 101 performs an operation for changing from the second state to the first state, by providing the fastening-release state in the second state.

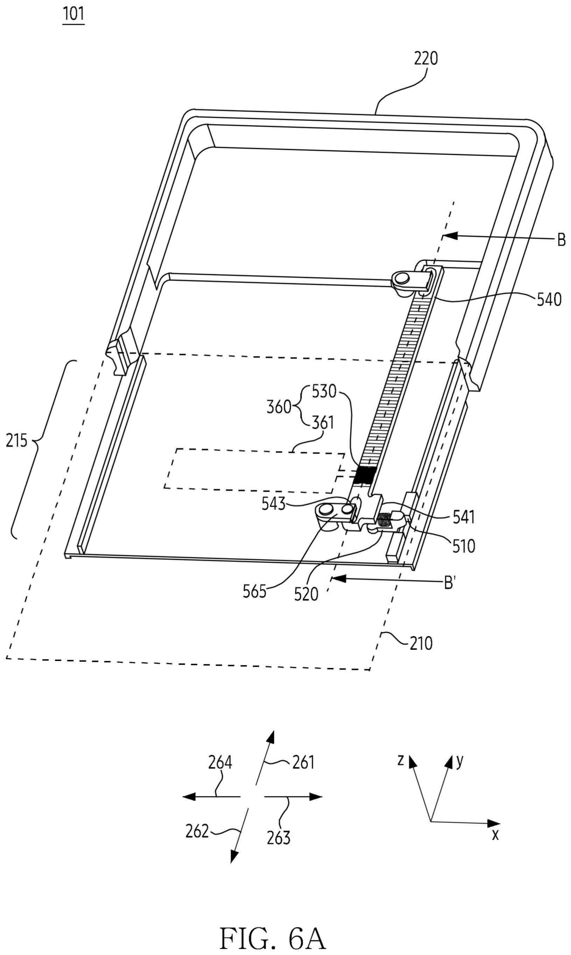

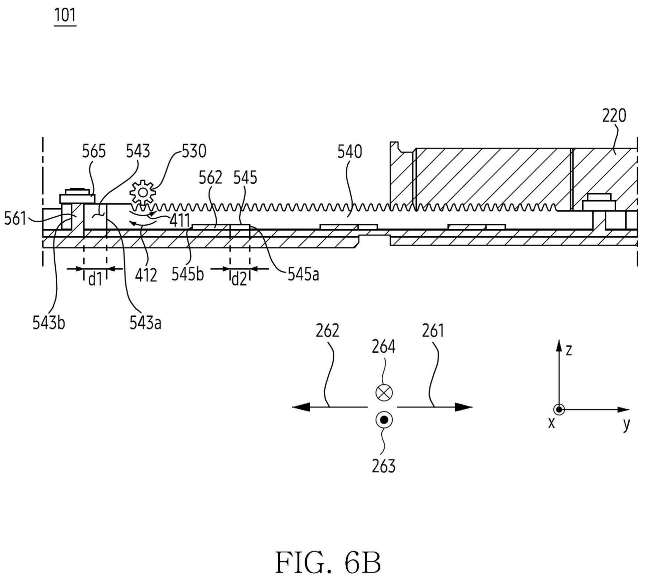

FIG. 6A illustrates a part of an exemplary electronic device. FIG. 6B is a partial cross-sectional view of an exemplary electronic device cut along line B-B' of FIG. 6A.

Referring to FIGS. 6A and 6B, an electronic device 101 may include a first housing 210, a second housing 220, a display (e.g., the display 230 of FIG. 2A), a drive unit 360, and a second gear 540. The first housing 210 may include a support portion 215, a stopper 520, and an elastic structure 550. The second housing 220 may include a fastening groove 510. The drive unit 360 may include a motor 361 and a first gear 530. The second gear 540 may include a protrusion structure 541.

Hereinafter, overlapping descriptions of the configurations described in FIGS. 5A, 5B, and 5C will be omitted.

According to an embodiment, the second gear 540 may further include a first guide hole 543 for guiding movement of the second housing 220. The second housing 220 may further include a first guide pin 561 that passes through the first guide hole 543, configured to move the second housing 220 in accordance with movement of the second gear 540 by contacting either of two ends 543a and 543b of the first guide hole 543.

For example, the first guide hole 543 may have a length in a first direction 261 and a second direction 262 opposite to the first direction 261. For example, the first guide hole 543 may be disposed in a portion where gear teeth of the second gear 540 are not formed. For example, the first guide hole 543 may be disposed in two ends of the second gear 540. For example, the first guide pin 561 may protrude from the second housing 220 toward the second gear 540. For example, the first guide pin 561 may be configured such that the second gear 540 is assembled to the second housing 220 by passing through the first guide hole 543. For example, the first guide pin 561 may be configured to move the second housing 220 along the second gear 540 moved by rotation of the first gear 530 by passing through the first guide hole 543.

For example, when the second housing 220 moves with respect to the first housing 210, the first guide pin 561 may contact either of the two ends 543a and 543b of the first guide hole 543.

For example, by having the length in the first direction 261 and the second direction 262 opposite to the first direction, the first guide hole 543 may be moved along the second gear 540 moved by the rotation of the first gear 530 with respect to the first guide pin 561 passing through the first guide hole 543. While the first guide hole 543 moves from a position where the end 543a of the first guide hole 543 contacts first guide pin 561 to a position where the other end 543b of the first guide hole 543 contacts the first guide pin 561, the second gear 540 may move relative to the second housing 220 in the first direction 261. While the first guide hole 543 moves from the position where the other end 543b of the first guide hole 543 contacts the first guide pin 561 to the position where the end 543a of the first guide hole 543 contacts first guide pin 561, the second gear 540 may move relative to the second housing 220 in the second direction 262.

For example, as the other end 543b of the first guide hole 543 contacts the first guide pin 561 while the electronic device 101 changes from a first state to a second state, the second gear 540 may be configured to move the second housing 220 relative to the first housing 210 in the first direction 261. The second gear 540 may move the second housing 220 relative to the first housing 210 in the first direction 261, by being moved in the first direction 261 by rotation of the first gear 530 in a first rotation direction 411 by driving the motor 361.

For example, as the end 543a of the first guide hole 543 contacts the first guide pin 561, while the electronic device 101 changes from the second state to the first state, the second gear 540 may be configured to move the second housing 220 relative to the first housing 210 in the second direction 262. The second gear 540 may move the second housing 220 relative to the first housing 210 in the second direction 262, by being moved in the second direction 262 by rotation of the first gear 530 in a second rotation direction 412 by driving the motor 361.

According to an embodiment, the second gear 540 may further include a guide groove 545 for guiding movement of the second gear 540 with the first guide hole 543. The second housing 220 may further include a guide block 562 configured to move the second housing 220 with the first guide pin 561 in accordance with movement of the second gear 540, by contacting either of two ends 545a and 545b of the guide groove 545.

For example, the guide groove 545 may be disposed on another side opposite to a side on which the gear teeth of the second gear 540 are formed. The other side may be a side that contacts the second housing 220. For example, the guide block 562 may be spaced apart from the first guide pin 561 and may protrude from the second housing 220 toward the second gear 540. For example, at least a part of the guide block 562 may be configured such that the second housing 220 is moved along the second gear 540 moved by the rotation of the first gear 530, by being disposed in the guide groove 545.

For example, when the second housing 220 moves with respect to the first housing 210, the guide block 562 may contact either of the two ends 545a and 545b of the guide groove 545.

For example, by having the length in the first direction 261 and the second direction 262 opposite to the first direction, the guide groove 545 may be moved along the second gear 540 moved by the rotation of the first gear 530 with respect to the guide block 562, in which at least a part of the guide block 562 is disposed in the guide groove 545. The second gear 540 may move relative to the second housing 220 in the first direction 261 while the guide groove 545 moves from a position where the end 545a of the guide groove 545 contacts the guide block 562 to a position where the other end 545b of the guide groove 545 contacts the guide block 562. The second gear 540 may move relative to the second housing 220 in the second direction 262 while the guide groove 545 moves from the position where the other end 545b of the guide groove 545 contacts the guide block 562 to the position where the end 545a of the guide groove 545 contacts the guide block 562.

For example, as the other end 545b of the guide groove 545 contacts the guide block 562 while the electronic device 101 is changed from the first state to the second state, the second gear 540 may be configured to move the second housing 220 relative to the first housing 210 in the first direction 261. The second gear 540 may move the second housing 220 relative to the first housing 210 in the first direction 261 by being moved in the first direction 261 by the rotation of the first gear 530 in the first rotation direction 411 by driving the motor 361.

For example, as the end 545a of the guide groove 545 contacts the guide block 562 while the electronic device 101 changes from the second state to the first state, the second gear 540 may be configured to move the second housing 220 relative to the first housing 210 in the second direction 262. The second gear 540 may move the second housing 220 relative to the first housing 210 in the second direction 262 by being moved in the second direction 262 by the rotation of the first gear 530 in the second rotation direction 412 by driving the motor 361.

According to an embodiment, a distance d1 at which the first guide hole 543 is movable with respect to the first guide pin 561 may be substantially the same as a distance d2 at which the guide groove 545 is movable with respect to the guide block 562. For example, a distance from the first guide pin 561 to an end farther from the first guide pin 561 among the two ends 543a and 543b of the first guide hole 543 passed through by the first guide pin 561 may be substantially the same as a distance from the guide block 562 to an end farther from the guide block 562 among the two ends 545a and 545b of the guide groove 545 in which at least a part of the guide block 562 is disposed. As the distance d1 is substantially the same as the distance d2, the guide block 562 may be configured such that the second housing 220 is moved with respect to the first housing 210 by the movement of the second gear 540 with the guide pin 561. As the distance d1 is substantially the same as the distance d2, the guide block 562 may reduce damage to the first guide hole 543 by the guide pin 561.

It has been described that the second gear 540 includes the first guide hole 543 and the guide groove 545 and the second housing 220 includes the first guide pin 561 and the guide block 562, but is not limited thereto. The second gear 540 may include a plurality of first guide holes and a plurality of guide grooves. The second housing may include a plurality of first guide pins passing through each of the plurality of first guide holes and a plurality of guide blocks in which at least some of the plurality of guide blocks are disposed in each of the plurality of guide grooves.

According to an embodiment, as the second gear 540 moves with respect to the second housing 220 while the first guide hole 543 moves with respect to the first guide pin 561 and the guide groove 545 moves with respect to the guide block 562, the electronic device 101 may be changed from a fastened state to a fastening-release state in the second state.

According to an embodiment, the second housing 220 may further include a fastening member 565 fastened to the first guide pin 561 passing through the first guide hole 543 to prevent the second gear 540 from being separated from the second housing 220. For example, the fastening member 565 may be coupled to the first guide pin 561 to form a gap between the second gear 540 and the fastening member 565 to provide movement of the second gear 540 with respect to the second housing 220.

According to the above-described embodiment, the electronic device 101 may be configured to move the stopper 520 in the second state by including the second gear 540 movable with respect to the second housing 220 in the second state. The second gear 540 may be configured to guide movement of the second gear 540 by including the first guide hole 543 passed through by the first guide pin 561 and the guide groove 545 accommodating at least a part of the guide block 562, and move the second housing 220 with respect to the first housing 210 by the movement of the second gear 540.

FIGS. 7A, 7B, 7C, and 7D illustrate an operation of an exemplary electronic device for changing from a first state to a second state.

Referring to FIGS. 7A, 7B, 7C, and 7D, an electronic device 101 may include a first housing 210, a second housing 220, a display (e.g., the display 230 of FIG. 2A), a drive unit 360, and a second gear 540. The first housing 210 may include a support portion 215, a stopper 520, and an elastic structure (e.g., the elastic structure 550 of FIG. 5B). The second housing 220 may include a fastening groove 510, a first guide pin 561, and a guide block 562. The drive unit 360 may include a motor 361 and a first gear 530. The second gear 540 may include a protrusion structure 541, a first guide hole 543, and a guide groove 545. The protrusion structure 541 may include guide sides 541a, 541b, and 541c for guiding movement of the stopper 520. The stopper 520 may include a guide structure (e.g., the guide structure 525 of FIG. 5A). The guide sides 541a, 541b, and 541c may include the first side 541a, the second side 541b and the third side 541c extending from the first side 541a and inclined with respect to the first side 541a.

According to an embodiment, while the electronic device 101 is changed from a first state to a second state, the second gear 540 may be moved in a first direction 261 by the first gear 530 that rotates in a first rotation direction (e.g., the first rotation direction 411 of FIG. 4A) by driving the motor 361.

Referring to FIGS. 7A and 7B, in the first state, the second gear 540 may move with respect to the second housing 220. By moving relative to the second housing 220 in the first direction 261, the second gear 540 may move from a position where an end 543a of the first guide hole 543 contacts the first guide pin 561 to a position where another end 543b of the first guide hole 543 contacts the first guide pin 561. By moving relative to the second housing 220 in the first direction 261, the second gear 540 may move from a position where an end 545a of the guide groove 545 contacts the guide block 562 to a position where another end 545b of the guide groove 545 contacts the guide block 562. The second gear 540 may first move relative to the second housing 220 in the first direction 261 in the first state before the second housing 220 moves relative to the first housing 210 in the first direction 261.

Referring to FIGS. 7B, 7C, and 7D, the second housing 220 may be moved with respect to the first housing 210 by the second gear 540 moving relative to the first housing 210 in the first direction 261 while changing from the first state to the second state. The second housing 220 may be moved in the first direction 261 by the first guide pin 561 pressed in the first direction 261 by the first guide hole 543 moving in the first direction 261. The second housing 220 may be moved in the first direction 261 by the guide block 562 pressed in the first direction 261 by the guide groove 545 moving in the first direction 261.

The protrusion structure 541 may move relative to the first housing 210 in the first direction 261 along the second gear 540 moving relative to the first housing 210 in the first direction 261 with the second housing 220. As the protrusion structure 541 moves relative to the first housing 210 in the first direction 261, the protrusion structure 541 may move to a position that contacts the stopper 520 disposed in the support portion 215 of the first housing 210.

The stopper 520 may move relative to the first housing 210 in a third direction 263 or a fourth direction opposite to the third direction 263 along at least a part of the guide sides 541a, 541b, and 541c of the protrusion structure 541 moving relative to the first housing 210 in the first direction 261. The fastening groove 510 may be positioned at a point corresponding to a point where the stopper 520 is disposed by moving in the first direction 261 along the second housing 220 moving relative to the first housing 210 in the first direction 261.

For example, when referring to FIGS. 7B and 7C, the stopper 520 may be moved relative to the first housing 210 in a fourth direction 264 by the protrusion structure 541 moving with respect to the first housing 210. The guide structure 525 of the stopper 520 may move the stopper 520 in the fourth direction 264 while moving along the third side 541c of the protrusion structure 541 to a position that contacts the first side 541a connected to the third side 541c. The elastic structure 550 may be compressed in the fourth direction 264 by the stopper 520 that contacts the first side 541a.

For example, when referring to FIGS. 7C and 7D, the stopper 520 may be moved relative to the first housing 210 in the third direction 263 by the protrusion structure 541 moving with respect to the first housing 210. The guide structure 525 of the stopper 520 may be configured to move the stopper 520 relative to the first housing 210 in the third direction 263 by moving to a position that contacts the second side 541b via the first side 541a moving relative to the first housing 210 in the first direction 261.

When the electronic device 101 completes a change from the first state to the second state, the second side 541b may be configured to provide a fastened state in which at least a part of the stopper 520 is positioned in the fastening groove 510 by moving the stopper 520 in the third direction 263 with the elastic structure 550 from which the compression in the fourth direction 264 is released.

According to the above-described embodiment, by including the stopper 520 configured to provide the fastened state by being at least partially positioned in the fastening groove 510 when the change from the first state to the second state is completed, the electronic device 101 may reduce damage to the electronic device 101 and/or an internal component of the electronic device 101 by an external impact in the second state.

FIGS. 7E, 7F, and 7G illustrate an operation of an exemplary electronic device for changing from a second state to a first state.

Referring to FIGS. 7E, 7F, and 7G, an electronic device 101 may include a first housing 210, a second housing 220, a display (e.g., the display 230 of FIG. 2A), a drive unit 360, and a second gear 540. The first housing 210 may include a support portion 215, a stopper 520, and an elastic structure (e.g., the elastic structure 550 of FIG. 5B). The second housing 220 may include a fastening groove 510, a first guide pin 561, and a guide block 562. The drive unit 360 may include a motor 361 and a first gear 530. The second gear 540 may include a protrusion structure 541, a first guide hole 543, and a guide groove 545. The protrusion structure 541 may include guide sides 541a, 541b, and 541c for guiding movement of the stopper 520. The stopper 520 may include a guide structure (e.g., the guide structure 525 of FIG. 5A). The guide sides 541a, 541b, and 541c may include the first side 541a, the second side 541b and the third side 541c extending from the first side 541a and inclined with respect to the first side 541a.

According to an embodiment, while the electronic device 101 changes from a second state to a first state, the second gear 540 may be moved in a second direction 262 by the first gear 530 that rotates in a second rotation direction (e.g., the second rotation direction 412 of FIG. 4B) by driving the motor 361.

Referring to FIGS. 7E and 7F, in the second state, the second gear 540 may move with respect to the second housing 220. By moving relative to the second housing 220 in the second direction 262, the second gear 540 may move from a position where another end 543b of the first guide hole 543 contacts the first guide pin 561 to a position where an end 543a of the first guide hole 543 contacts the first guide pin 561. By moving relative to the second housing 220 in the second direction 262, the second gear 540 may be moved from a position where another end 545b of the guide groove 545 contacts the guide block 562 to a position where an end 545a of the guide groove 545 contacts the guide block 562. The second gear 540 may first move relative to the second housing 220 in the second direction 262 in the second state before the second housing 220 moves relative to the first housing 210 in the second direction 262.

While moving from the position where the other end 543b of the first guide hole 543 contacts the first guide pin 561 to the position where the end 543a of the first guide hole 543 contacts the first guide pin 561 and moving from the position where the other end 545b of the guide groove 545 contacts the guide block 562 to the position where the end 545a of the guide groove 545 contacts the guide block 562, the guide structure 525 of the stopper 520 may be moved to a position that contacts the first side 541a along the second side 541b by the protrusion structure 541 moving in the second direction 262. The guide structure 525 may move the stopper 520 in a fourth direction 264 by moving to the position that contacts the first side 541a. The stopper 520 may be configured to provide a fastening-release state in which the stopper is positioned outside the fastening groove 510 in the second state by moving in the fourth direction 264. The first side 541a may be a side that contacts the guide structure 525 of the stopper 520 in the fastening-release state.

Referring to FIGS. 7F and 7G, the second housing 220 may be moved with respect to the first housing 210 by the second gear 540 moving relative to the first housing 210 in the second direction 262 while changing from the second state to the first state. The second housing 220 may be moved in the second direction 262 by the first guide pin 561 pressed in the second direction 262 by the first guide hole 543 moving in the second direction 262. The second housing 220 may be moved in the second direction 262 by the guide block 562 pressed in the second direction 262 by the guide groove 545 moving in the second direction 262.

By including the stopper 520 configured to move outside the fastening groove 510 in the second state before performing an operation for changing from the second state to the first state, the electronic device 101 according to the above-described embodiment may be configured such that the second housing 220 is movable with respect to the first housing 210. By including the protrusion structure 541 configured to move the stopper 520 outside the fastening groove 510 by moving with respect to the second housing 220 in the second state, the electronic device 101 may reduce unnecessary power consumption for moving the stopper 520 and reduce damage to the stopper 520 and the second housing 220.

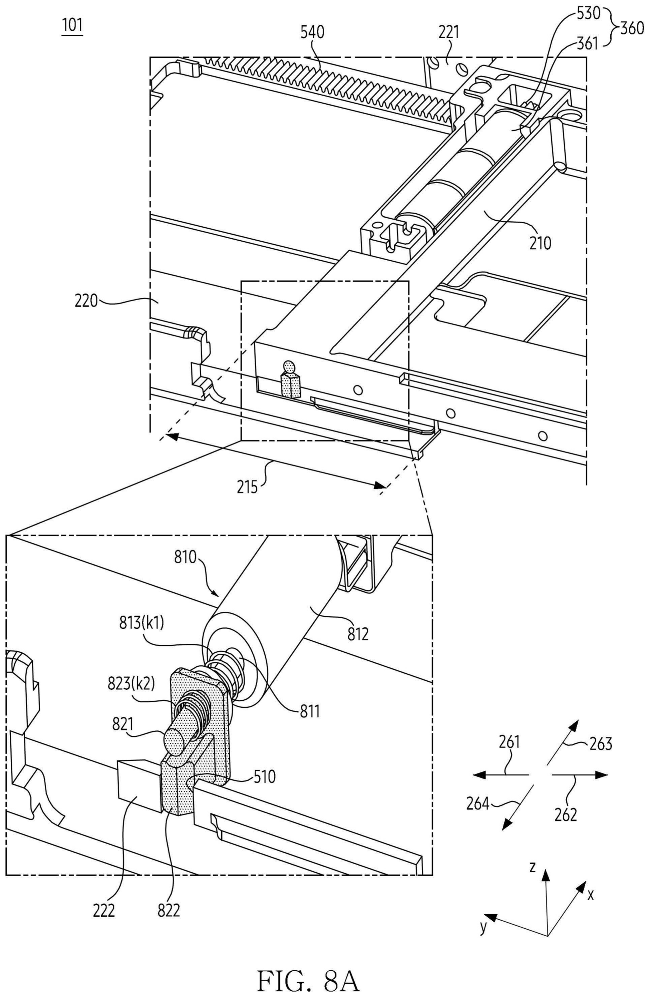

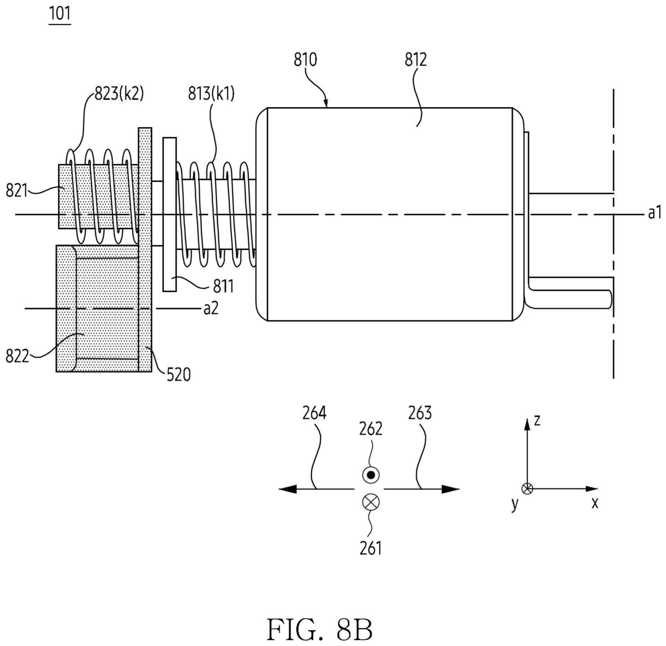

FIGS. 8A and 8B illustrate a part of an exemplary electronic device.

Referring to FIGS. 8A and 8B, an electronic device 101 may include a first housing 210, a second housing 220, and a display (e.g., the display 230 of FIG. 2A). The first housing 210 may include a support portion 215 and a stopper 520. The second housing 220 may include a fastening groove 510.

According to an embodiment, the electronic device 101 may further include a first actuator 810 coupled to the first housing 210 and a processor (e.g., the processor 120 of FIG. 1).

The first actuator 810 may include a plunger 811 that contacts the stopper 520, a first solenoid 812 that surrounds at least a part of the plunger 811 and is configured to move the plunger 811 in a third direction 263 when a current flows, and a first elastic member 813 configured to press the stopper 520 in a fourth direction 264 by pressing the plunger 811 in the fourth direction 264 opposite to the third direction 263.

For example, the plunger 811 may be connected to the stopper 520. For example, the plunger 811 may be configured to move the stopper 520 in the third direction 263 or the fourth direction 264 opposite to the third direction 263 by being coupled to the stopper 520. For example, at least a part of the plunger 811 may be disposed in the first solenoid 812. Although not illustrated, the first solenoid 812 may include a coil therein. When a current flows through the first solenoid 812, the coil may generate a magnetic field. By the magnetic field generated by the coil, the plunger 811 may be configured to move in the third direction 263 toward the inside of the first solenoid 812. For example, the first elastic member 813 may be configured to press the plunger 811 in the fourth direction 264 opposite to the third direction 263 using the first solenoid 812. The first elastic member 813 may be configured to press the stopper 520 that contacts the plunger 811 in the fourth direction 264 by pressing the plunger 811 in the fourth direction 264.

For example, unlike as illustrated in FIGS. 5A, 5B, and 5C, the fastening groove 510 paired with the stopper 520 may be formed in a second edge 222 facing a first edge 221 of the second housing 220. The stopper 520 may be pressed in the fourth direction 264 by the plunger 811 pressed in the fourth direction 264 by the first elastic member 813.

For example, the fastening groove 510 may be positioned at a point corresponding to a point where the stopper 520 is disposed in a second state. The stopper 520 may provide a fastened state in which at least a part of the stopper 520 is positioned in the fastening groove 510 by being pressed in the fourth direction 264 by the plunger 811 when the electronic device 101 completes a change from a first state to the second state.

The processor 120 may be configured, in response to a user input indicating a change of the state of the electronic device 101 from the second state to the first state, to control the first solenoid 812 to move the plunger 811 in the third direction 263.

For example, in response to the user input indicating a change of the state of the electronic device 101 from the second state to the first state, the processor 120 may operate to apply a current to the first solenoid 812. As the processor 120 operates to apply the current to the first solenoid 812, the first solenoid 812 may generate a magnetic field in the first solenoid 812. The plunger 811 may be moved in the third direction 263 by the magnetic field generated in the first solenoid 812. The first elastic member 813 may be configured to move the stopper 520 in the third direction 263 by being pressed in the third direction 263 by the plunger 811 moved in the third direction 263. The stopper 520 may be configured to provide a fastening-release state in which it is positioned outside the fastening groove 510 in the second state by moving in the third direction 263.

According to an embodiment, the electronic device 101 may further include a second elastic member 823 configured to press the stopper 520 in the third direction 263 using the first housing 210. The stopper 520 may include a first protrusion 821 surrounded by the second elastic member 823 and configured to guide deformation of the second elastic member 823, and a second protrusion 822 spaced apart from the first protrusion 821 and at least partially inserted into the fastening groove 510 in the fastened state. The first protrusion 821 may be concentric with the plunger 811.

For example, a center line of the first protrusion 821 and a center line of the plunger 811 may be the same as a first axis a1 based on an x-axis parallel to a direction in which the stopper 520 moves. A center line of the second protrusion 822 into which at least a part is inserted in the fastened state may be a second axis a2 different from the first axis a1. As the center line of the first protrusion 821 and the center line of the plunger 811 coincide with the first axis a1, the second elastic member 823 surrounding the first protrusion 821 may be configured to maintain an equilibrium state with the first elastic member 813 surrounding the plunger 811. As the center line of the second protrusion 822 has an eccentric structure with the center line of the first protrusion 821, the electronic device 101 may reduce damage to the first actuator 810 by an external impact in the second state.

According to an embodiment, an elastic coefficient k1 of the first elastic member 813 may be greater than an elastic coefficient k2 of the second elastic member 823. The first solenoid 812 may be configured, when a current flows, to move the plunger 811 in the third direction 263 by shrinking the first elastic member 813 with the second elastic member 823 in the third direction 263. For example, as the elastic coefficient k1 of the first elastic member 813 is greater than the elastic coefficient k2 of the second elastic member 823 when a current is not applied to the first solenoid 812 in the second state, the first elastic member 813 may be configured to provide the fastened state in which at least a part of the stopper 520 is positioned in the fastening groove 510 by pressing the second elastic member 823 in the fourth direction 264. For example, when a current is applied to the first solenoid 812 in the second state, the second elastic member 823 may press the first elastic member 813 in the third direction and may be configured to provide the fastening-release state in which the stopper 520 is positioned outside the fastening groove 510 as the first solenoid 812 moves the plunger 811 in the third direction.

According to the above-described embodiment, by including the first actuator 810 configured to move the stopper 520 in the second state according to whether a current is applied, the electronic device 101 may be configured such that the stopper 520 provides the electronic device 101 with the fastened state and the fastening-release state in the second state.

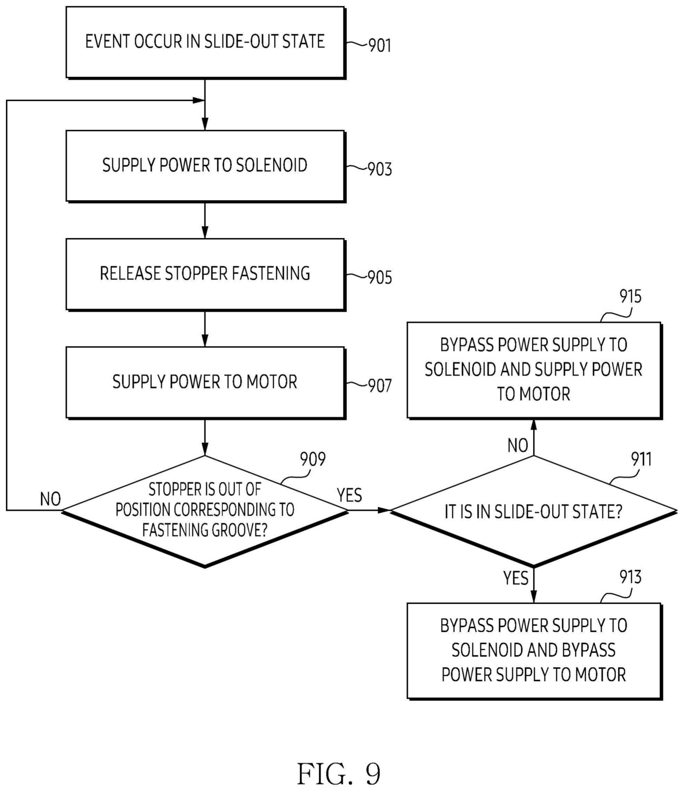

FIG. 9 illustrates an example of an operation of an exemplary electronic device.

An operation of FIG. 9 may be performed by the electronic device 101 of FIGS. 8A and 8B.

Referring to FIG. 9, in an operation 901, a processor (e.g., the processor 120 of FIG. 1) may identify an event for changing an electronic device 101 from a second state to a first state. The first state may be referred to as a slide-in state. The second state may be referred to as a slide-out state. For example, the event may be a slide-in operation. For example, the event may be an operation for a second region (e.g., the region 230b of FIG. 2C) exposed to the outside of a first housing (e.g., the first housing 210 of FIG. 2A) to be rolled into the first housing 210. For example, the event may be an operation in which a second housing (e.g., the second housing 220 of FIG. 2A) moves relative to the first housing 210 in a second direction (e.g., the second direction 262 of FIG. 2A) opposite to a first direction (e.g., the first direction 261 of FIG. 2A).

In an operation 903, the processor 120 may supply power to a solenoid (e.g., the first solenoid 812 of FIG. 8A) of an actuator (e.g., the first actuator 810 of FIG. 8A) based on identifying the event for changing the electronic device 101 from the second state to the first state. The solenoid may form a magnetic field via the supplied power.

In an operation 905, a stopper (e.g., the stopper 520 of FIG. 8A) may be moved outside a fastening groove (e.g., the fastening groove 510 of FIG. 8A) based on the magnetic field formed in the solenoid in the operation 903. The stopper 520 may be configured to change the electronic device 101 from a fastened state to a fastening-release state by moving outside the fastening groove 510.

In an operation 907, the processor 120 may be configured to supply power to a motor (e.g., the motor 361 of FIG. 3A) based on identifying that power is supplied to the solenoid.

In an operation 909, the processor 120 may identify whether the stopper 520 is out of a position corresponding to the fastening groove 510. The processor 120 may be configured to supply power to the solenoid while identifying that the stopper 520 is positioned at a point corresponding to the fastening groove 510. The processor 120 may be configured to bypass power supply to the solenoid while identifying that the stopper 520 is out of the position corresponding to the fastening groove 510.

In an operation 911, the processor 120 may identify whether the electronic device 101 is in the first state. The processor 120 may be configured to supply power to the motor 361 while identifying that the electronic device 101 is changing from the second state to the first state. The processor 120 may be configured to bypass power supply to the motor 361 while identifying that the electronic device 101 is in the first state.

In an operation 913, the processor 120 may be configured to bypass power supply to the solenoid and the motor 361 while identifying that the electronic device 101 is in the first state.

In an operation 915, the processor 120 may be configured to bypass power supply to the solenoid and to supply power to the motor 361 while identifying that the electronic device 101 is changing from the second state to the first state.

According to the above-described embodiment, the electronic device 101 may be configured to change the electronic device 101 from the fastened state to the fastening-release state by including the solenoid configured to move the stopper 520 outside the fastening groove 510 by receiving power in the second state in order to change from the second state to the first state.

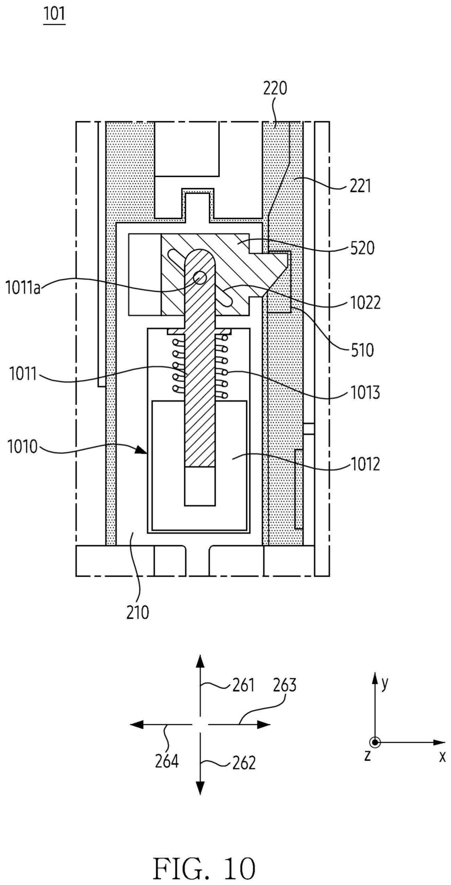

FIG. 10 illustrates a part of an exemplary electronic device.

Referring to FIG. 10, an electronic device 101 may include a first housing 210, a second housing 220, and a display (e.g., the display 230 of FIG. 2A). The first housing 210 may include a support portion (e.g., the support portion 215 of FIG. 5A) and a stopper 520. The second housing 220 may include a fastening groove 510.

According to an embodiment, the electronic device 101 may further include a second actuator 1010 coupled to the first housing 210 and a processor (e.g., the processor 120 of FIG. 1). According to an embodiment, the electronic device 101 may perform the operation of FIG. 9.

The second actuator 1010 may include a support bar 1011 configured to move the stopper 520 in a third direction 263 by moving in a first direction 261 or to move the stopper 520 in a fourth direction 264 opposite to the third direction 263 by moving in a second direction 262 opposite to the first direction 261, a second solenoid 1012, surrounding at least a part of the support bar 1011, configured to move the support bar 1011 in the second direction 262 when a current flows, and a third elastic member 1013 configured to press the support bar 1011 in the first direction 261.

For example, the support bar 1011 may be connected to the stopper 520. For example, the support bar 1011 may be configured to move the stopper 520 in the third direction 263 or the fourth direction 264 opposite to the third direction 263 by being assembled with the stopper 520. For example, at least a part of the support bar 1011 may be disposed in the second solenoid 1012. Although not illustrated, the second solenoid 1012 may include a coil therein. When a current flows through the second solenoid 1012, the coil may generate a magnetic field. By the magnetic field generated by the coil, the support bar 1011 may be configured to move in the second direction 262 toward the inside of the second solenoid 1012. For example, the third elastic member 1013 may be configured to press the support bar 1011 in the first direction 261 opposite to the second direction 262 using the second solenoid 1012. The third elastic member 1013 may be configured to press the stopper 520 that contacts the support bar 1011 in the third direction 263 by pressing the support bar 1011 in the first direction 261.

For example, the fastening groove 510 paired with the stopper 520 may be formed in a first edge 221 of the second housing 220. The stopper 520 may be pressed in the third direction 263 by the support bar 1011 pressed in the third direction 263 by the third elastic member 1013.

For example, the fastening groove 510 may be positioned at a point corresponding to a point where the stopper 520 is disposed in a second state. The stopper 520 may provide a fastened state in which at least a part of the stopper 520 is positioned in the fastening groove 510 by being pressed in the third direction 263 by the support bar 1011 when the electronic device 101 completes a change from a first state to the second state.

The processor 120 may be configured, in response to a user input indicating a change of the state of the electronic device 101 from the second state to the first state, to control the second solenoid 1012 to move the support bar 1011 in the second direction 262.

The third elastic member 1013 may be configured, by the third elastic member 1013 being pressed in the second direction 262 by the support bar 1011 moved in the second direction 262, to move the stopper 520 in the third direction 263.

For example, in response to the user input indicating the change of the state of the electronic device 101 from the second state to the first state, the processor 120 may operate to apply a current to the second solenoid 1012. As the processor 120 operates to apply the current to the second solenoid 1012, the second solenoid 1012 may generate a magnetic field in the second solenoid 1012. By the magnetic field generated in the second solenoid 1012, the support bar 1011 may be moved in the second direction 262. The third elastic member 1013 may be configured to move the stopper 520 in the fourth direction 264 by being pressed in the second direction 262 by the support bar 1011 moved in the second direction 262. The stopper 520 may be configured to provide a fastening-release state in which it is positioned outside the fastening groove 510 in the second state by moving in the fourth direction 264.

According to an embodiment, the stopper 520 may include a second guide hole 1022 for guiding movement of the stopper 520 by the support bar 1011. The support bar 1011 may include a second guide pin 1011a configured to pass through the second guide hole 1022 and to move the stopper 520 in the third direction 263 and the fourth direction 264 opposite the third direction 263 by moving along the second guide hole 1022 in accordance with movement of the support bar 1011. For example, in order to provide movement of the stopper 520 in the third direction and the fourth direction by the support bar 1011 moving in the first direction and the second direction, the second guide hole 1022 may be inclined with respect to an x-axis and a y-axis when a xy plane is viewed from above. However, it is not limited thereto. While changing from the fastened state to the fastening-release state, the second guide pin 1011a may slide in the second guide hole 1022 and move the stopper 520 in the fourth direction 264, by moving in the second direction 262 along the support bar 1011 moving in the second direction 262.

By including the second actuator 1010 configured to move the stopper 520 in the second state according to whether a current is applied, the electronic device 101 according to the above-described embodiment may be configured such that the stopper 520 provides the electronic device 101 with the fastened state and the fastening-release state in the second state.

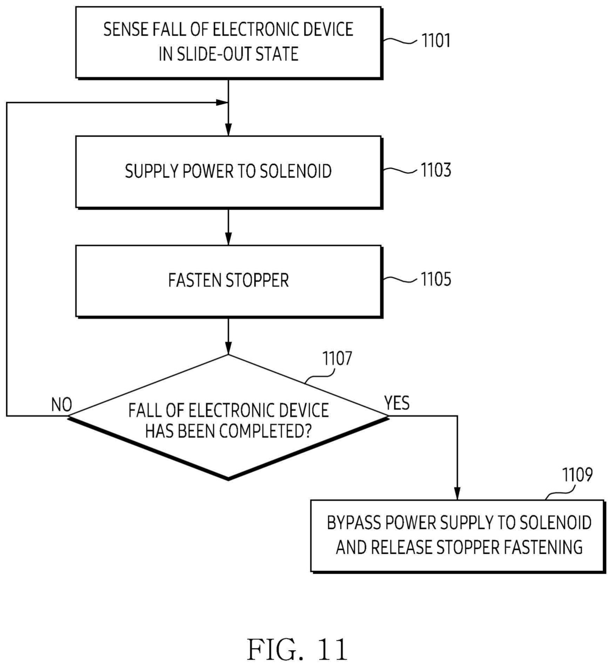

FIG. 11 illustrates an example of an operation of an exemplary electronic device.

The operation of FIG. 11 may be performed by the electronic device 101 of FIGS. 8A, 8B, and 10.

Referring to FIG. 11, unlike the solenoid (e.g., the first solenoid 812 of FIG. 8A and the second solenoid 1012 of FIG. 10) of FIGS. 8A, 8B, and 10, a solenoid may be configured to move a stopper (e.g., the stopper 520 of FIG. 8A) toward a fastening groove (e.g., the fastening groove 510 of FIG. 8A) when power is supplied to the solenoid. When power is not supplied to the solenoid in a second state, the electronic device 101 may be in a fastening-release state in which the stopper 520 is positioned outside the fastening groove 510.

Referring to FIG. 11, in an operation 1101, a processor (e.g., the processor 120 of FIG. 1) may sense a fall of the electronic device 101 in the second state. For example, the processor 120 may detect the fall of the electronic device 101 via a fall detection sensor.

In an operation 1103, the processor 120 may be configured to supply power to the solenoid while sensing the fall of the electronic device 101. The solenoid may form a magnetic field in the solenoid by receiving the power.

In an operation 1105, the stopper 520 may be moved toward the fastening groove 510 by the magnetic field formed in the solenoid in the operation 1103. The stopper 520 may be configured to change the electronic device 101 from the fastening-release state to a fastened state by being moved toward the fastening groove 510.

In an operation 1107, the processor 120 may identify whether the fall of electronic device 101 has been completed. For example, the processor 120 may sense whether the fall of the electronic device 101 has been completed via a gyro sensor. The processor 120 may be configured to supply power to the solenoid based on identifying that the fall of the electronic device 101 is not completed. The processor 120 may be configured to bypass power supply to the solenoid based on identifying that the fall of the electronic device 101 is completed.

In an operation 1109, the processor 120 may be configured to bypass power supply to the solenoid based on identifying that the fall of the electronic device 101 is completed. The stopper 520 may be moved outside the fastening groove 510 based on the power supply to the solenoid being bypassed. The stopper 520 may be configured to change the electronic device 101 from the fastened state to the fastening-release state by moving outside the fastening groove 510.

According to the above-described embodiment, the electronic device 101 may be configured to change the electronic device 101 from the fastening-release state to the fastened state by including the solenoid configured to move the stopper 520 toward the fastening groove 510 by receiving power when the electronic device 101 falls in the second state.

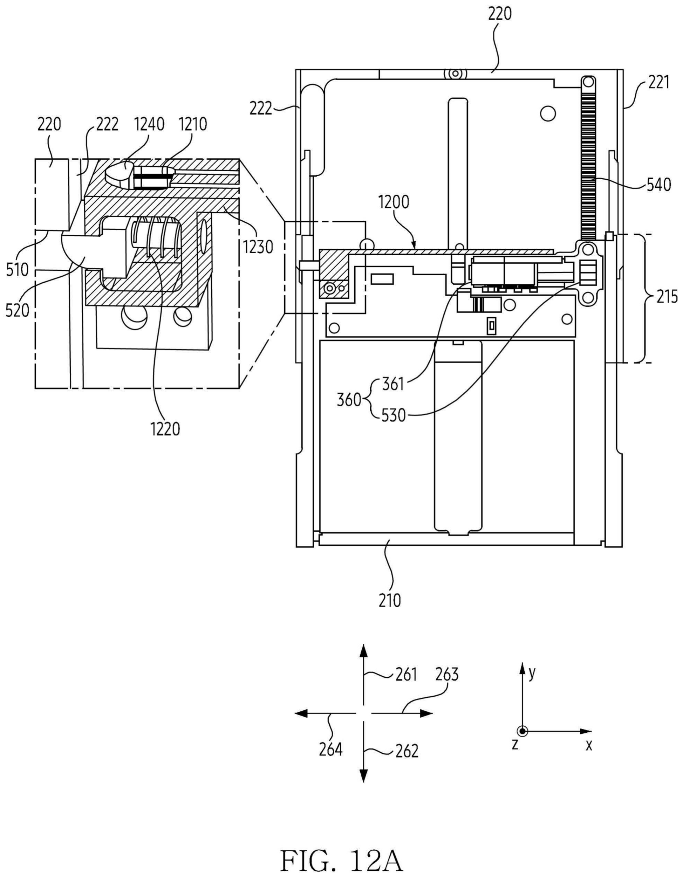

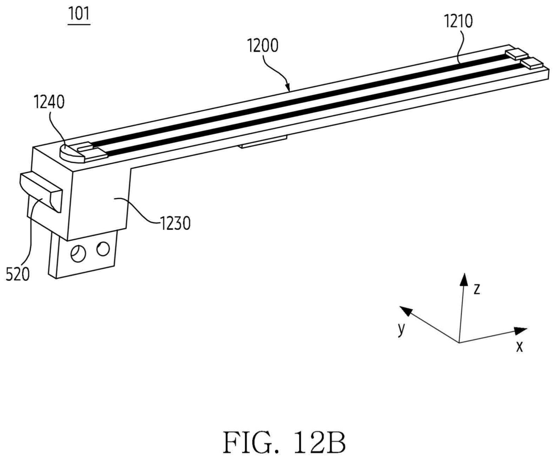

FIGS. 12A and 12B illustrate a part of an exemplary electronic device.

Referring to FIGS. 12A and 12B, an electronic device 101 may include a first housing 210, a second housing 220, and a display (e.g., the display 230 of FIG. 2A). The first housing 210 may include a support portion 215 and a stopper 520. The second housing 220 may include a fastening groove 510. According to an embodiment, the electronic device 101 may further include a drive unit 360 coupled to the first housing 210 and including a motor 361 and a first gear 530. According to an embodiment, the electronic device 101 may further include a second gear 540 configured to move the second housing 220 by the first gear 530 rotated by driving the motor 361.

According to an embodiment, the electronic device 101 may further include a third actuator 1200 coupled to the first housing 210 and a processor (e.g., the processor 120 of FIG. 1).

The third actuator 1200 may include a wire structure 1210 contacting the stopper 520, configured to press the stopper 520 in a third direction 263 by shrinking when a current flows, and a fourth elastic member 1220 configured to press the stopper 520 in a fourth direction 264 opposite to the third direction 263.

For example, the fastening groove 510 may be formed in a second edge 222 of the second housing 220. In a second state, the fourth elastic member 1220 may be configured to provide a fastened state in which the stopper 520 is at least partially positioned in the fastening groove 510 by being configured to press the stopper 520 in the fourth direction 264.

For example, when a current flows through the wire structure 1210, a temperature of the wire structure 1210 may increase. As the temperature of the wire structure 1210 increases, the wire structure 1210 may be configured to shrink. For example, the third actuator 1200 may further include a frame structure 1230 for guiding shrinkage of the wire structure 1210 and movement of the stopper 520. The frame structure 1230 may support the wire structure 1210 and the stopper 520 in the support portion 215 of the first housing 210. For example, the stopper 520 may further include a third protrusion 1240 that contacts the wire structure 1210 and guides the movement of the stopper 520. In the second state, the wire structure 1210 may be configured to provide a fastening-release state in which the stopper 520 is positioned outside the fastening groove 510 by pressing the third protrusion 1240 in the third direction 263 when a current is applied to the wire structure 1210. The fourth elastic member 1220 may be configured to move the stopper 520 in the third direction 263 by being pressed in the third direction 263 by the shrunken wire structure 1210.

The processor 120 may be configured, in response to a user input indicating a change of the state of the electronic device 101 from the second state to a first state, to control the wire structure 1210 to shrink the wire structure 1210.

For example, in response to the user input indicating the change of the state of the electronic device 101 from the second state to the first state, the processor 120 may operate to apply a current to the wire structure 1210. As the processor 120 operates to apply the current to the wire structure 1210, the wire structure 1210 may shrink the wire structure 1210. The stopper 520 may be moved in the third direction by the shrunken wire structure 1210. The stopper 520 may be configured to provide the fastening-release state in which it is positioned outside the fastening groove 510 in the second state by moving in the third direction 263.

According to an embodiment, the wire structure 1210 may include a shape memory alloy. The wire structure 1210 may be configured to shrink when a current is applied by including the shape memory alloy. However, it is not limited thereto.

By including the third actuator 1200 configured to move the stopper 520 in the second state according to whether a current is applied, the electronic device 101 according to the above-described embodiment may be configured such that the stopper 520 provides the electronic device 101 with the fastened state and the fastening-release state in the second state.

According to the above-described embodiment, an electronic device (e.g., the electronic device 101 of FIG. 1) may comprise a first housing (e.g., the first housing 210 of FIG. 2A), and a second housing that includes a fastening groove (e.g., the fastening groove 510 of FIG. 5A) and is movable relative to the first housing in a first direction (e.g., the first direction 261 of FIG. 2A) and in a second direction (e.g., the second direction 262 of FIG. 2A) opposite to the first direction. The electronic device may comprise a display (e.g., the display 230 of FIG. 2A) including a first region (e.g., the region 230a of FIG. 2A) disposed on the second housing and a second region (e.g., the region 230b of FIG. 2C) that extends from the first region and is rolled up into the first housing or exposed outside the first housing along the second housing moved with respect to the first housing. The first housing may include a support portion (e.g., the support portion 215 of FIG. 5A) that overlaps a part of the second housing in a plurality of states, including a first state in which a display area of the display exposed outside the first housing has a minimum size and a second state of the electronic device in which the display area has a maximum size, and a stopper (e.g., the stopper 520 of FIG. 5A) positioned within the support portion and paired with the fastening groove. The stopper may be configured to provide, to the electronic device, in the second state, a fastened state in which at least a part of the stopper is positioned inside the fastening groove to fasten the second housing to the first housing, and a fastening-release state in which the stopper is positioned outside the fastening groove to release the fastening between the second housing and the first housing. According to the above-mentioned embodiment, by including the stopper and the fastening groove configured to provide the fastening state and the fastening-release state in the second state, the electronic device may reduce damage to the electronic device by an external impact in the second state. The above-mentioned embodiment may have various effects including the above-mentioned effects.

According to an embodiment, the electronic device may further comprise a drive unit (e.g., the drive unit 360 of FIG. 3A) coupled to the first housing, including a motor (e.g., the motor 361 of FIG. 3A) and a first gear (e.g., the pinion gear 362 of FIG. 3A or the first gear 530 of FIG. 5A) rotatable by driving the motor, and a second gear (e.g., the rack gear 363 of FIG. 3A or the second gear 540 of FIG. 5A) engaging the first gear, configured to move the second housing relative to the first housing in the first direction and the second direction opposite to the first direction by the driving the motor, the second gear in the second housing being movable with respect to the second housing in the second state. The first housing may further comprise an elastic structure (e.g., the elastic structure 550 of FIG. 5B) configured, in the second state, to press the stopper toward the fastening groove. The second gear may include a protrusion structure (e.g., the protrusion structure 541 of FIG. 5A) configured to change the electronic device from the fastened state to the fastening-release state by pressing the stopper in a direction different from a pressing direction of the elastic structure, as the second gear moves with respect to the second housing in the second state. According to the above-mentioned embodiment, the electronic device may move the stopper in the second state by including the second gear movable with respect to the second housing in the second state. The above-mentioned embodiment may have various effects including the above-mentioned effects.

According to an embodiment, the second gear may further include a first guide hole (e.g., the first guide hole 543 of FIG. 6A) for guiding movement of the second housing. The second housing may further include a first guide pin (e.g., the first guide pin 561 of FIG. 6B) that passes through the first guide hole, configured to move the second housing in accordance with the movement of the second gear by contacting either of two ends (e.g., the two ends 543a and 543b of FIG. 6B) of the first guide hole. According to the above-mentioned embodiment, the electronic device may guide the movement of the second housing by the second gear and reduce separation of the second gear from the second housing by including the first guide hole and the first guide pin. The above-mentioned embodiment may have various effects including the above-mentioned effects.

According to an embodiment, the second gear may further include a guide groove (e.g., the guide groove 545 of FIG. 6B) for guiding movement of the second gear with the first guide hole. The second housing may further include a guide block (e.g., the guide block 562 of FIG. 6B) configured to move the second housing with the first guide pin in accordance with the movement of the second gear, by contacting either of two ends (e.g., the two ends 545a and 545b of FIG. 6B) of the guide groove. According to the above-mentioned embodiment, the electronic device may guide the movement of the second housing by the second gear and reduce separation of the second gear from the second housing by including the guide groove and the guide block. The above-mentioned embodiment may have various effects including the above-mentioned effects.

According to an embodiment, the electronic device may further comprise a drive unit coupled to the first housing, including a motor and a first gear rotatable by driving the motor, and a second gear that engages the first gear, configured to move the second housing relative to the first housing in the first direction and the second direction opposite to the first direction by the driving the motor, the second gear in the second housing being movable with respect to the second housing in the second state. The first housing may further comprise an elastic structure configured, in the second state, to press the stopper in a third direction (e.g., the third direction 263 of FIG. 5A) relative to the first housing. The second gear may include guide sides (e.g., the guide sides 541a, 541b, and 541c of FIG. 5A) for guiding movement of the stopper, and a protrusion structure configured to change the electronic device from the fastened state to the fastening-release state by pressing the stopper in a fourth direction (e.g., the fourth direction 264 of FIG. 5A) opposite to the third direction, as the second gear moves with respect to the second housing in the second state. The stopper may include a guide structure (e.g., the guide structure 525 of FIG. 5A) configured to move the stopper relative to the first housing in the third direction and the fourth direction opposite to the third direction in accordance with the movement of the protrusion structure by contacting at least a part of the guide sides in the second state. According to the above-mentioned embodiment, the stopper may move the stopper by the movement of the second gear in the second state by including the guide structure pressed along the guide sides. The above-mentioned embodiment may have various effects including the above-mentioned effects.

According to an embodiment, the guide sides may include a first side (e.g., the first side 541a of FIG. 5A) that contacts the guide structure in the fastening-release state, and a second side (e.g., the second side 541b of FIG. 5A) that provides the fastened state with the elastic structure by having an inclination with respect to the first side and extends from the first side. The guide structure may be configured to, during transition from the first state to the second state, by the guide structure being moved to a position contacting the second side, via the first side moving in the first direction relative to the first housing, move the stopper in the third direction relative to the first housing. The guide structure may be configured to, during transition from the fastened state to the fastening-release state, by the guide structure being moved to a position contacting the first side, via the second side moving in the second direction relative to the second housing, move the stopper in the fourth direction relative to the first housing. According to the above-mentioned embodiment, the guide sides may be configured to provide the fastened state and the fastening-release state to the electronic device by including the first side and the second side configured to move the stopper. The above-mentioned embodiment may have various effects including the above-mentioned effects.

According to an embodiment, the first housing may further comprise a seating groove (e.g., the seating groove 570 of FIG. 5B) configured to guide movement of the stopper by supporting at least a part of the stopper and being aligned (or arranged) with the fastening groove in the second state. According to the above-mentioned embodiment, the first housing may provide a seating space for the stopper and the elastic structure by including the seating groove. The above-mentioned embodiment may have various effects including the above-mentioned effects.

According to an embodiment, the second housing may further include a first portion (e.g., the first portion 220a of FIG. 5A) that contacts the stopper in the fastened state and extends from the fastening groove, and a second portion (e.g., the second portion 220b of FIG. 5A) extending from the first portion. Rigidity of the first portion may be greater than rigidity of the second portion. According to the above-mentioned embodiment, since the rigidity of the first portion is greater than the rigidity of the second portion, the second housing may reduce damage to the first portion by an external impact in the second state. The above-mentioned embodiment may have various effects including the above-mentioned effects.

According to an embodiment, the electronic device may further comprise a first actuator (e.g., the first actuator 810 of FIG. 8A) coupled to the first housing and including a plunger (e.g., the plunger 811 of FIG. 8A) that contacts the stopper, a first solenoid (e.g., the first solenoid 812 of FIG. 8A) that surrounds at least a part of the plunger and, when a current flows, is configured to move the plunger in the third direction, and a first elastic member (e.g., the first elastic member 813 of FIG. 8A) configured to press the stopper in the fourth direction by pressing the plunger in the fourth direction opposite to the third direction, and a processor (e.g., the processor 120 of FIG. 1). The processor may be configured, in response to a user input indicating a change of a state of the electronic device from the second state to the first state, to control the first solenoid to move the plunger in the third direction. The first elastic member may be configured, by the first elastic member being pressed in the third direction by the plunger moved in the third direction, to move the stopper in the third direction. According to the above-mentioned embodiment, the electronic device may be configured such that the stopper provides the fastened state and the fastening-release state to the electronic device in the second state, by including the first actuator configured to move the stopper in the second state according to whether a current is applied. The above-mentioned embodiment may have various effects including the above-mentioned effects.

According to an embodiment, the electronic device may further comprise a second elastic member (e.g., the second elastic member 823 of FIG. 8A) configured to press the stopper in the third direction by using the first housing. The stopper may include a first protrusion (e.g., the first protrusion 821 of FIG. 8A) surrounded by the second elastic member and configured to guide deformation of the second elastic member, and a second protrusion (e.g., the second protrusion 822 of FIG. 8A) spaced apart from the first protrusion and at least partially inserted into the fastening groove in the fastened state. The first protrusion may be concentric with the plunger. According to the above-mentioned embodiment, the stopper may reduce damage to the plunger by an external impact in the second state by including the first protrusion and the second protrusion. The above-mentioned embodiment may have various effects including the above-mentioned effects.

According to an embodiment, an elastic coefficient (e.g., k1 of FIG. 8B) of the first elastic member may be greater than an elastic coefficient (e.g., k2 of FIG. 8B) of the second elastic member. The first solenoid may be configured, when the current flows, to move the plunger in the third direction by shrinking the first elastic member with the second elastic member in the third direction. According to the above-mentioned embodiment, since the elastic coefficient of the first elastic member is greater than the elastic coefficient of the second elastic member, the electronic device may be configured such that the stopper provides the fastened state and the fastening-release state to the electronic device by using the first elastic member and the solenoid. The above-mentioned embodiment may have various effects including the above-mentioned effects.

According to an embodiment, the electronic device may further comprise a second actuator (e.g., the second actuator 1010 of FIG. 10) coupled to the first housing and including a support bar (e.g., the support bar 1011 of FIG. 10) configured to move the stopper in the third direction by moving in the first direction or to move the stopper in the fourth direction opposite to the third direction by moving in the second direction opposite to the first direction, a second solenoid (e.g., the second solenoid 1012 of FIG. 10) that surrounds at least a part of the support bar and, when a current flows, is configured to move the support bar in the second direction, and a third elastic member (e.g., the third elastic member 1013 of FIG. 10) configured to press the support bar in the first direction, and a processor. The processor may be configured, in response to a user input indicating a change of a state of the electronic device from the second state to the first state, to control the second solenoid to move the support bar in the second direction. The third elastic member may be configured, by the third elastic member being pressed in the second direction by the support bar moved in the second direction, to move the stopper in the third direction. According to the above-mentioned embodiment, by including the second actuator configured to move the stopper in the second state according to whether a current is applied, the electronic device may be configured such that the stopper provides the fastened state and the fastening-release state to the electronic device in the second state. The above-mentioned embodiment may have various effects including the above-mentioned effects.

According to an embodiment, the stopper may include a second guide hole (e.g., the second guide hole 1022 of FIG. 10) for guiding movement of the stopper by the support bar. The support bar may include a second guide pin (e.g., the second guide pin 1011a of FIG. 10) configured to pass through the second guide hole and to move the stopper in the third direction and the fourth direction opposite the third direction by moving along the second guide hole in accordance with movement of the support bar. According to the above-mentioned embodiment, by including the second guide hole and the second guide pin, the electronic device may be configured to move the stopper in the third direction or the fourth direction opposite to the third direction by the support bar moving in the first direction or in the second direction opposite to the first direction. The above-mentioned embodiment may have various effects including the above-mentioned effects.

According to an embodiment, the electronic device may further comprise a third actuator (e.g., the third actuator 1200 of FIG. 12A) coupled to the first housing and including a wire structure (e.g., the wire structure 1210 of FIG. 12A) contacting the stopper, configured to press the stopper in the third direction by shrinking, when a current flows, and a fourth elastic member (e.g., the fourth elastic member 1220 of FIG. 12A) configured to press the stopper in the fourth direction opposite to the third direction, and a processor. The processor may be configured, in response to a user input indicating a change of a state of the electronic device from the second state to the first state, to control the wire structure to shrink the wire structure. The fourth elastic member may be configured, by the fourth elastic member being pressed in the third direction by the shrunk wire structure, to move the stopper in the third direction. According to the above-mentioned embodiment, by including the third actuator configured to move the stopper in the second state according to whether a current is applied, the electronic device may be configured such that the stopper provides the fastened state and the fastening-release state to the electronic device in the second state. The above-mentioned embodiment may have various effects including the above-mentioned effects.

According to an embodiment, the wire structure may comprise a shape-memory alloy. According to the above-mentioned embodiment, the wire structure may be configured to move the stopper according to whether a current is applied by including the shape memory alloy. The above-mentioned embodiment may have various effects including the above-mentioned effects.

According to an embodiment, an electronic device may comprise a first housing, and a second housing that includes a fastening groove and is movable relative to the first housing in a first direction and in a second direction opposite to the first direction. The electronic device may comprise a display including a first region disposed on the second housing and a second region that extends from the first region and is rolled up into the first housing or exposed outside the first housing along the second housing moved with respect to the first housing. The electronic device may comprise a drive unit coupled to the first housing, including a motor and a first gear rotatable by driving the motor. The electronic device may comprise a second gear in the second housing engaging the first gear, configured to move the second housing relative to the first housing in the first direction and the second direction opposite to the first direction by the driving the motor, the second gear being movable with respect to the second housing in the second state. The first housing may include a support portion that overlaps a part of the second housing in a plurality of states, including a first state in which a display area of the display exposed outside the first housing has a minimum size and a second state of the electronic device in which the display area has a maximum size, a stopper positioned within the support portion and paired with the fastening groove, an elastic structure configured, in the second state, to press the stopper toward the fastening groove, and a seating groove configured to guide movement of the stopper by supporting at least a part of the stopper and being aligned with the fastening groove in the second state. The second gear may include a protrusion structure configured to press the stopper in a direction different from a pressing direction of the elastic structure, as the second gear moves with respect to the second housing in the second state. The stopper may be configured to provide, to the electronic device, in the second state, a fastened state in which at least a part of the stopper is positioned inside the fastening groove to fasten the second housing to the first housing, and a fastening-release state in which the stopper is positioned outside the fastening groove to release the fastening between the second housing and the first housing. According to the above-mentioned embodiment, the electronic device may move the stopper in the second state by including the second gear movable with respect to the second housing in the second state. The above-mentioned embodiment may have various effects including the above-mentioned effects.

According to an embodiment, the second gear may further include a first guide hole for guiding movement of the second gear. The second housing may further include a first guide pin that passes through the first guide hole, configured to move the second housing in accordance with the movement of the second gear by contacting either of two ends of the first guide hole. According to the above-mentioned embodiment, the electronic device may guide the movement of the second housing by the second gear and reduce separation of the second gear from the second housing by including the first guide hole and the first guide pin. The above-mentioned embodiment may have various effects including the above-mentioned effects.

According to an embodiment, the second gear may further include a guide groove for guiding movement of the second gear with the first guide hole. The second housing may further include a guide block configured to move the second housing with the first guide pin in accordance with the movement of the second gear, by contacting either of two ends of the guide groove. According to the above-mentioned embodiment, the electronic device may guide the movement of the second housing by the second gear and reduce separation of the second gear from the second housing by including the guide groove and the guide block. The above-mentioned embodiment may have various effects including the above-mentioned effects.

According to an embodiment, the elastic structure may be configured to press the stopper in a third direction relative to the first housing. The protrusion structure may be configured to include guide sides for guiding the movement of the stopper, and change the electronic device from the fastened state to the fastening-release state by pressing the stopper in a fourth direction opposite to the third direction, as the second gear moves with respect to the second housing in the second state. The stopper may include a guide structure configured to move the stopper relative to the first housing in the third direction and the fourth direction opposite to the third direction in accordance with the movement of the protrusion structure by contacting at least a part of the guide sides in the second state. According to the above-mentioned embodiment, the stopper may move the stopper by the movement of the second gear in the second state by including the guide structure pressed along the guide sides. The above-mentioned embodiment may have various effects including the above-mentioned effects.

According to an embodiment, the guide sides may include a first side that contacts the guide structure in the fastening-release state, and a second side that provides the fastened state with the elastic structure by having an inclination with respect to the first side and extends from the first side. The guide structure may be configured to, during transition from the first state to the second state, by the guide structure being moved to a position contacting the second side, via the first side moving in the first direction relative to the first housing, move the stopper in the third direction relative to the first housing. The guide structure may be configured to, during transition from the fastened state to the fastening-release state, by the guide structure being moved to a position contacting the first side, via the second side moving in the second direction relative to the second housing, move the stopper in the fourth direction relative to the first housing. According to the above-mentioned embodiment, the guide sides may be configured to provide the fastened state and the fastening-release state to the electronic device by including the first side and the second side configured to move the stopper. The above-mentioned embodiment may have various effects including the above-mentioned effects.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (210);
a second housing (220) that includes a fastening groove (510) and is movable relative to the first housing (210) in a first direction (261) and in a second direction (262) opposite to the first direction (261); and
a display (230) including a first region (230a) disposed on the second housing (220) and a second region (230b) that extends from the first region (230a) and is rolled up into the first housing (210) or exposed outside the first housing (210) along the second housing (220) moved with respect to the first housing (210);
wherein the first housing (210) includes:
a support portion (215) that overlaps a part of the second housing (220) in a plurality of states, including a first state of the electronic device (101) in which a display area of the display (230) exposed outside the first housing (210) has a minimum size and a second state of the electronic device (101) in which the display area has a maximum size; and
a stopper (520) positioned within the support portion (215) and paired with the fastening groove (510), and
wherein the stopper (520) is configured to provide, to the electronic device (101), in the second state:
a fastened state in which at least a part of the stopper (520) is positioned inside the fastening groove (510) to fasten the second housing (220) to the first housing (210), and
a fastening-release state in which the stopper (520) is positioned outside the fastening groove (510) to release the fastening between the second housing (220) and the first housing (210).

2. The electronic device of claim 1, further comprising:
a drive unit (360) coupled to the first housing (210), including a motor (361) and a first gear (362; 530) rotatable by driving the motor (361); and
a second gear (363; 540) engaging the first gear (362; 530), configured to move the second housing (220) relative to the first housing (210) in the first direction (261) and the second direction (262) opposite to the first direction (261) by the driving the motor (361), the second gear (363; 540) being movable with respect to the second housing (220) in the second state,
wherein the first housing (210) further comprises an elastic structure (550) configured, in the second state, to press the stopper (520) toward the fastening groove (510), and
wherein the second gear (363; 540) includes a protrusion structure (541) configured to change the electronic device (101) from the fastened state to the fastening-release state by pressing the stopper (520) in a direction different from a pressing direction of the elastic structure (550), as the second gear (363; 540) moves with respect to the second housing (220) in the second state.

3. The electronic device of claim 1 or claim 2,
wherein the second gear (363; 540) further includes a first guide hole (543) for guiding movement of the second housing (220), and
wherein the second housing (220) further includes a first guide pin (561) that passes through the first guide hole (543), configured to move the second housing (220) in accordance with the movement of the second gear (363; 540) by contacting either of two ends (543a; 543b) of the first guide hole (543).

4. The electronic device of any one of claims 1 to 3,
wherein the second gear (363; 540) further includes a guide groove (545) for guiding movement of the second gear (363; 540) with the first guide hole (543), and
wherein the second housing (220) further includes a guide block (562) configured to move the second housing (220) with the first guide pin (561) in accordance with the movement of the second gear (363; 540), by contacting either of two ends (545a; 545b) of the guide groove (545).

5. The electronic device of any one of claims 1 to 4, further comprising:
a drive unit (360) coupled to the first housing (210), including a motor (361) and a first gear (362; 530) rotatable by driving the motor (361); and
a second gear (363; 540) that engages the first gear (362; 530), configured to move the second housing (220) relative to the first housing (210) in the first direction (261) and the second direction (262) opposite to the first direction (261) by the driving the motor (361), the second gear (363; 540) being movable with respect to the second housing (220) in the second state,
wherein the first housing (210) further comprises an elastic structure (550) configured, in the second state, to press the stopper (520) in a third direction (263) relative to the first housing (210),
wherein the second gear (363; 540) includes:
guide sides (541a; 541b; 541c) for guiding movement of the stopper (520); and
a protrusion structure (541) configured to change the electronic device (101) from the fastened state to the fastening-release state by pressing the stopper (520) in a fourth direction (264) opposite to the third direction (263), as the second gear (363; 540) moves with respect to the second housing (220) in the second state, and
wherein the stopper (520) includes a guide structure (525) configured to move the stopper (520) relative to the first housing (210) in the third direction (263) and the fourth direction (264) opposite to the third direction (263) in accordance with movement of the protrusion structure (541) by contacting at least a part of the guide sides (541a; 541b; 541c) in the second state.

6. The electronic device of any one of claims 1 to 5,
wherein the guide sides (541a; 541b; 541c) include:
a first side (541a) that contacts the guide structure (525) in the fastening-release state; and
a second side (541b) that provides the fastened state with the elastic structure (550) by having an inclination with respect to the first side (541a) and extends from the first side (541a), and
wherein the guide structure (525) is configured to:
during transition from the first state to the second state, by the guide structure (525) being moved to a position contacting the second side (541b), via the first side (541a) moving in the first direction (261) relative to the first housing (210), move the stopper (520) in the third direction (263) relative to the first housing (210), and
during transition from the fastened state to the fastening-release state, by the guide structure (525) being moved to a position contacting the first side (541a), via the second side (541b) moving in the second direction (262) relative to the second housing (220), move the stopper (520) in the fourth direction (264) relative to the first housing (210).

7. The electronic device of any one of claims 1 to 6, wherein the first housing (210) further comprises a seating groove (570) configured to guide movement of the stopper (520) by supporting at least a part of the stopper (520) and being aligned with the fastening groove (510) in the second state.

8. The electronic device of any one of claims 1 to 7,
wherein the second housing (220) further includes:
a first portion (220a) that contacts the stopper (520) in the fastened state and extends from the fastening groove (510); and
a second portion (220b) extending from the first portion (220a), and
wherein rigidity of the first portion (220a) is greater than rigidity of the second portion (220b).

9. The electronic device of any one of claims 1 to 8, further comprising:
a first actuator (810) coupled to the first housing (210) and including:
a plunger (811) that contacts the stopper (520),
a first solenoid (812) that surrounds at least a part of the plunger (811) and, when a current flows, is configured to move the plunger (811) in the third direction (263), and
a first elastic member (813) configured to press the stopper (520) in the fourth direction (264) by pressing the plunger (811) in the fourth direction (264) opposite to the third direction (263); and
a processor (120),
wherein the processor (120) is configured, in response to a user input indicating a change of a state of the electronic device (101) from the second state to the first state, to control the first solenoid (812) to move the plunger (811) in the third direction (263), and
wherein the first elastic member (813) is configured, by the first elastic member (813) being pressed in the third direction (263) by the plunger (811) moved in the third direction (263), to move the stopper (520) in the third direction (263).

10. The electronic device of any one of claims 1 to 9, further comprising:
a second elastic member (823) configured to press the stopper (520) in the third direction (263) by using the first housing (210),
wherein the stopper (520) includes:
a first protrusion (821) surrounded by the second elastic member (823) and configured to guide deformation of the second elastic member (823); and
a second protrusion (822) spaced apart from the first protrusion (821) and at least partially inserted into the fastening groove (510) in the fastened state, and
wherein the first protrusion (821) is concentric with the plunger (811).

11. The electronic device of any one of claims 1 to 10,
wherein an elastic coefficient (ki) of the first elastic member (813) is greater than an elastic coefficient (k₂) of the second elastic member (823), and
wherein the first solenoid (812) is configured, when the current flows, to move the plunger (811) in the third direction (263) by shrinking the first elastic member (813) with the second elastic member (823) in the third direction (263).

12. The electronic device of any one of claims 1 to 11, further comprising:
a second actuator (1010) coupled to the first housing (210) and including:
a support bar (1011) configured to move the stopper (520) in the third direction (263) by moving in the first direction (261) or to move the stopper (520) in the fourth direction (264) opposite to the third direction (263) by moving in the second direction (262) opposite to the first direction (261),
a second solenoid (1012) that surrounds at least a part of the support bar (1011) and, when a current flows, is configured to move the support bar (1011) in the second direction (262), and
a third elastic member (1013) configured to press the support bar (1011) in the first direction (261); and
a processor (120),
wherein the processor (120) is configured, in response to a user input indicating a change of a state of the electronic device (101) from the second state to the first state, to control the second solenoid (1012) to move the support bar (1011) in the second direction (262), and
wherein the third elastic member (1013) is configured, by the third elastic member (1013) is being pressed in the second direction (262) by the support bar (1011) moved in the second direction (262), to move the stopper (520) in the third direction (263).

13. The electronic device of any one of claims 1 to 12,
wherein the stopper (520) includes a second guide hole (1022) for guiding movement of the stopper (520) by the support bar (1011), and
wherein the support bar (1011) includes a second guide pin (1011a) configured to pass through the second guide hole (1022) and to move the stopper (520) in the third direction (263) and the fourth direction (264) opposite the third direction (263) in accordance with movement of the support bar (1011).

14. The electronic device of any one of claims 1 to 13, further comprising:
a third actuator (1200) coupled to the first housing (210) and including:
a wire structure (1210) contacting the stopper (520), configured to press the stopper (520) in the third direction (263) by shrinking, when a current flows, and
a fourth elastic member (1220) configured to press the stopper (520) in the fourth direction (264) opposite to the third direction (263); and
a processor (120),
wherein the processor (120) is configured, in response to a user input indicating a change of a state of the electronic device (101) from the second state to the first state, to control the wire structure (1210) to shrink the wire structure (1210), and
wherein the fourth elastic member (1220) is configured, by the fourth elastic member (1220) being pressed in the third direction (263) by the shrunk wire structure (1210), to move the stopper (520) in the third direction (263).

15. The electronic device of any one of claims 1 to 14, wherein the wire structure (1210) comprises a shape-memory alloy.
